# NEUE EUROPÄISCHE PATENTSCHRIFT

(11) **EP 0 235 140 B2**
(45) Veröffentlichungstag und Bekanntmachung des Hinweises auf die Entscheidung über den Einspruch: **05.04.1995**
(45) Hinweis auf die Patenterteilung: 03.05.1989
(21) Anmeldenummer: 85905733.3
(22) Anmeldetag: 21.11.1985
(51) Int. Cl.: G11B 33/04, G11B 23/023

(54) **EINRICHTUNG ZUR AUFNAHME VON GEGENSTÄNDEN, ANORDNUNG MIT SOLCHEN EINRICHTUNGEN SOWIE VERFAHREN ZUR HERSTELLUNG**
DEVICE FOR HOLDING OBJECTS, ARRANGEMENT PROVIDED WITH SUCH DEVICES AND METHOD FOR THE PRODUCTION THEREOF
DISPOSITIF POUR LA RECEPTION D'OBJETS, INSTALLATION MUNIE DE TELS DISPOSITIFS ET PROCEDE POUR SA FABRICATION

(30) Priorität: 27.11.1984 AT 3757/84; 01.02.1985 AT 291/85
(43) Veröffentlichungstag der Anmeldung: 09.09.1987
(73) Patentinhaber: Lift Verkaufsgeräte-Gesellschaft m.b.H., A-1050 Wien (AT)
(72) Erfinder: SCHUBERT, Otto, A-1050 Wien (AT)
(74) Vertreter: Weinzinger, Arnulf, Dipl.-Ing.
(86) Internationale Anmeldenummer: AT8500049
(87) Internationale Veröffentlichungsnummer: WO8603327

(56) Entgegenhaltungen:
- EP-A- 0 023 577
- EP-A- 0 064 979
- EP-A- 0 085 911
- EP-A- 0 155 258
- EP-A- 0 162 999
- WO-A-82/01810
- CH-A- 262 708
- DE-U- 7 407 601
- FR-A- 2 401 783
- GB-A- 2 050 812
- US-A- 2 701 635
- US-A- 3 200 557
- US-A- 3 756 383
- US-A- 3 784 269

## Beschreibung

Die Erfindung betrifft eine Einrichtung zur Aufnahme bzw. Zurschaustellung von steifen, flachen Gegenständen, nämlich von CD-, Audio- oder Video-Kassetten bzw. deren Behältern, in einer im wesentlichen aufrechten Lage, mit einem Boden, in dessen Bereich Auflager zur Abstützung der Gegenstände in hintereinandergereihter Anordnung sowie schlitzartige Führungen zur Schwenklagerung der zwischen einer nach hinten geneigten Schräglage und einer nach vorne geneigten Schräglage verschwenkbaren Gegenstände vorgesehen sind, wobei die Führungen zu diesem Zweck mit paarweise zusammengehörigen Stützbereichen an Stützwänden ausgestattet sind und die paarweise zusammenwirkenden Stützbereiche in ihrer gegenseitigen Lage und in ihrer Höhe so angeordnet sind, dass die Gegenstände in beiden Schräglagen nur an Stellen tiefer als ihre horizontale Mittenlinie festgehalten werden.

Aus der DE-C-715 042 ist eine Schubkasteneinrichtung zur Aufbewahrung von Akten, Mappen, Karteien oder anderem Schriftgut bekannt, wobei ein Kasten vorgesehen ist, auf dessen Boden ein Rost gelegt wird, der mit Quernuten versehen ist, um ein Weggleiten des im Kasten aufbewahrten Schriftgutes auf dem Boden zu verhindern. Zur Abstützung des aufbewahrten Schriftgutes sind andererseits im oberen Kastenbereich in Abständen voneinander quer angeordnete Stützstangen vorgesehen, die praktisch eine Unterteilung des Kastens in Fächer mit sich bringen, und an denen jeweils ein Schriftgutpaket im oberen Bereich anliegt. Auf diese Weise kann in jedem "Fach" ein "Blättern" im darin enthaltenen Schriftgut durchgeführt werden, um ein bestimmtes Schriftstück od. dgl. zu finden. Eine ganz ähnliche Einrichtung mit einem profilierten Rosteinsatz ist ferner in der US-A-1 900 148 beschrieben. Ein Verrutschen von sog. CD-(Compact-Disc)-Kassetten, Videokassetten, Audiokassetten bzw. deren Behältern, insbesondere bei einem "Blättern", könnten diese bekannten Karteieinrichtungen, sollten sie für die Aufbewahrung solcher Gegenstände benutzt werden, jedoch kaum verhindern, und es wäre daher nur schwer möglich, solche Gegenstände in diesen Einrichtungen geordnet aufzunehmen und zur Schau zu stellen sowie insbesondere ein problemloses Blättern zu gewährleisten. Gerade ein derartiges "Blättern" ist aber auch bei den genannten Gegenständen, wenn sie in einschlägigen Geschäften (Schallplattengeschäften u. dgl.) zur Schau gestellt werden, unbedingt erwünscht, ähnlich wie es ja bereits bei den herkömmlichen Schallplatten im Prinzip möglich ist, wenn diese in kistenartigen Aufnahmebehältern einfach hintereinandergereiht aufbewahrt werden. Derartige kistenartige Aufnahmebehälter sind jedoch andererseits ohne weitere Massnahmen für die Aufnahme der genannten Art von Gegenständen (Kassetten) unter Ermöglichung eines Blätterns ebenfalls nicht geeignet, da diese Gegenstände eine grössere Dicke aufweisen und beim Blättern über eine Kante gekippt werden müssen, wobei sie leicht verrutschen. Auch würde bei allen diesen bekannten Einrichtungen im Falle der Verwendung für die genannten Kassetten von Nachteil sein, dass die Gegenstände gegeneinander scheuern und zerkratzt werden, und dies umso mehr, sollten einige Kassetten bereits entfernt worden sein, da die Gegenstände dann nicht mehr geordnet aufbewahrt werden können.

In der DE-A-2 801 567 wurde ferner bereits ein Einsatz für kistenförmige Aufnahmetröge vorgeschlagen, der zur Unterteilung dieser normalerweise für die Aufnahme von Langspiel-Schallplatten gedachten Tröge in mehrere nebeneinanderliegende Längsfächer für Audiokassetten vorgesehen ist. Die Audiokassetten sind dabei in gesonderten Packungen aufzunehmen, die hochstehende Beschriftungsblätter aufweisen, und diese Packungen sind im jeweiligen Längsfach unmittelbar hintereinander gereiht, wobei der Boden des Faches eben oder stufenförmig ansteigend ausgebildet ist. Demgemäss verrutschen auch hier die Packungen mit den Tonbandkassetten leicht, v. a., wenn ein Fach nicht ganz gefüllt ist, und ein "Blättern" zur besseren Betrachtung der einzelnen Kassetten ist somit auch hier nicht möglich.

Aus der US-A-2 263 255 und der DE-A-3 017 869 (bzw. der ihr entsprechenden GB-A-2 050 812) sind Einrichtungen zur Aufnahme von Gegenständen, wie z. B. Audiokassetten oder aber Kaugummipäcken, bekannt, bei denen ein im Schnitt sägezahnförmig profilierter Boden in einem kistenartigen Aufnahmebehälter vorgesehen ist. An der Rückseite eines solchen Aufnahmeabteiles ist eine mit dem Profilboden einstückige schräge Abstützfläche vorgesehen, an der die Gegenstände, nach hinten geneigt, rückseitig anliegen, wobei die sägezahnförmige Profilierung des Bodens, ähnlich wie bei den vorstehend genannten bekannten Einrichtungen der profilierte Boden, ein Wegrutschen der Gegenstände verhindern soll. Ein "Umschwenken" oder "Blättern" der Gegenstände ist auch hier nicht vorgesehen bzw. nicht möglich.

Aus der US-A-3 200 957 ist eine Einrichtung zur Zurschaustellung von Fleischpackungen in Selbstbedienungsgeschäften beschrieben, wobei die Fleischpackungen in einer flachen Schräglage hintereinandergereiht von einem Profilboden mit im Querschnitt dreieckförmigen Halteleisten abgestützt werden. Dadurch liegen die einander teilweise überlappenden Fleischpackungen nicht direkt aufeinander, so dass einerseits eine gute Zirkulation von Kühlluft und andererseits ein Herausnehmen einer Fleischpackung ohne Beeinträchtigung der anderen Packungen in der Reihe ermöglicht wird. Um dabei die Fleischpackungen sicher im vorderen Randbereich festzuhalten, wird dieser vordere Randbereich der Packungen durch die schräg nach hinten oben geneigt verlaufende Rückwand der Halteleisten übergriffen. Ein "Blättern" der wie erwähnt flach schrägliegend aufbewahrten Fleischpackungen ist auch hier nicht vorgesehen und auch nicht möglich.

Wie sodann aus der US-A-3784269 und der FR-A-2 401 783 (der die GB-A-2 005 226 entspricht) ersichtlich ist, wurde ein Weg, auch dickere Gegenstände, wie insbesondere Audiokassetten, schwenkbar in einer Kasteneinrichtung aufzubewahren, darin gesehen, für diese Gegenstände eigene Halter vorzusehen, die in der Kasteneinrichtung schwenkbar gelagert sind und die Gegenstände aufnehmen. Dabei können die Halter wannenartig, mit in entsprechenden Ausnehmungen von Seitenwänden aufgenommenen Lagerzapfen (US-A-3 784 269), oder schachtelartig, mit an den Schmalseiten vorgesehenen Lagervorsprüngen, die mit entsprechenden Lagerausnehmungen in Seitenwänden in Eingriff stehen (FR-A-2 401 783), ausgebildet sein. Eine ähnliche Halterung ist auch in der EP-A-85 911 beschrieben, bei der eigene Etuis für Magnetbandkassetten vorgesehen sind, wobei diese Etuis an den Schmalseiten mit Bohrungen versehen sind, die mit Lagerzapfen eines Aufnahmetrogs als Gelenk zusammenwirken. Alle diese Lösungen sind konstruktiv aufwendig und teuer, und überdies verhindern sie eine gute Platzausnutzung, wie sie anzustreben ist, um möglichst viele Gegenstände unterbringen zu können.

Eine Verbesserung wurde hier bereits durch einen weiteren Vorschlag (DE-GbM 84 08 388, der die nicht vor veröffentlichte ältere EP-A-155 258 entspricht) erzielt, gemäss welchem zur Schwenkabstützung der Kassetten od. dgl. Gegenstände im unteren Randbereich derselben querverlaufende Haltestangen vorgesehen sind. Auch gemäss diesem Vorschlag wird somit bereits eine Art Dreipunkt-Abstützung für die Gegenstände erzielt, jedoch ist bei der bekannten Einrichtung die Montage der Haltestangen noch verhältnismässig aufwendig und kostspielig, und überdies können sich auch Probleme dann ergeben, wenn mehrere Reihen von Gegenständen nebeneinander in einem Schaugestell vorgesehen werden und sich dann die Haltestangen über die Breite des Schaugestells erstrecken sollten, wobei aber dann ein Ausbiegen dieser Haltestangen auftreten kann, es sei denn, man wählt einen entsprechend grösseren Durchmesser der Haltestangen, was aber wieder mit einer schlechteren Platzausnutzung einhergeht, da dann die Gegenstände nicht mehr so dicht aneinander angeordnet werden können, sondern grössere Abstände voneinander aufweisen.

Aus der WO-A-82/01810 ist sodann ein Behälter zur Aufbewahrung von Disketten bekannt, der an seinen Seitenwänden angeformte, in Ansicht dreieckförmige Lagervorsprünge aufweist, die zur seitlichen Schwenklagerung von plattenförmigen Wendeteilern vorgesehen sind, welche zur Trennung und Abstützung der aufbewahrten Disketten dienen; die an den Seitenwänden angeformten Lagervorsprünge arbeiten dabei mit in den beiden längsseitigen unteren Eckbereichen vorgesehenen kurzen, schrägen Stützstegen zusammen, wobei die Wendeteiler im unteren Bereich seitliche Fortsätze aufweisen, mit denen sie in der jeweiligen Schwenklage an den Lagervorsprüngen und Stützstegen gehalten sind. Auch diese bekannten Behälter sind somit herstellungs- und montagemässig verhältnismässig aufwendig. Überdies ist von Nachteil, dass bei einer Herstellung aus Kunststoff die Lagervorsprünge und Stützstege leicht abbrechen.

Ein Behälter für Magnetbandkassetten, mit einer im Prinzip der letztgenannten Ausführung ähnlichen seitlichen Schwenklagerung, ist schliesslich in der nicht vorveröffentlichten älteren Anmeldung EP-A-162 999 gezeigt. Dabei sind an Seiten- oder Zwischenwänden des Behälters flanschartige Führungsaufnahmen zum Einschieben der Kassetten von oben her vorgesehen, und diese Führungsaufnahmen sind je zur Bildung eines Schwenk- oder Kipplagers mit einer mittleren Engstelle und von dieser weg nach oben bzw. unten verlaufenden, divergierenden Anschlägen versehen, die die Schwenklagen der Kassetten festlegen. Zur Abstützung der Kassetten sind ferner im Bereich des Behälterbodens gesonderte seitliche Auflager vorgesehen, wobei diese seitlichen Auflager und die seitlichen Führungsaufnahmen insbesondere einstückig ausgebildet sind. Bei diesem bekannten Behälter sind somit die Kassetten unter Freilassung des grössten Teiles des unteren Randbereiches (wo der übliche verdickte Kassettenabschnitt mit der Öffnung für das Magnetband vorliegt) ebenfalls nur seitlich gelagert und gehalten, und im Hinblick auf eine ausreichend stabile Fixierung der Kassetten bloss von der Seite her müssen die Führungsaufnahmen, wie dargestellt, auch relativ hoch sein, abgesehen von der Notwendigkeit einer ausreichend festen, massiven Ausführung, um ein frühzeitiges Ab- oder Ausbrechen der Aufnahmen zu verhindern. Damit ergibt sich aber wieder ein relativ grosser Abstand zwischen aufeinanderfolgenden Kassetten und somit eine schlechte Platzausnutzung. Ferner ist auch hier, wie bei den zuvor erläuterten Einrichtungen, von Nachteil, dass Seitenwände bzw. seitliche Begrenzungen zwingend vorgegeben sind, so dass die Variationsmöglichkeiten hinsichtlich mehrerer nebeneinander vorgesehener Reihen von hintereinander angeordneten Kassetten od. dgl. eingeschränkt sind.

Es ist nun Aufgabe der Erfindung, eine Einrichtung der eingangs angegebenen Art zu schaffen, mit der eine Vielzahl von flachen, steifen Gegenständen, nämlich den genannten Kassetten bzw. Behältern, unter Ermöglichen eines ruhigen, reibungslosen "Blätterns" sowie unter Beibehaltung einer geordneten Ausrichtung möglichst platzsparend zur Schau gestellt werden kann, wobei überdies eine einfache Ausbildung sowie Montage angestrebt wird.

Zur Lösung dieser Aufgabe ist die erfindungsgemäße Ein richtung der eingangs angegebenen Art dadurch gekennzeichnet, daß der Boden querverlaufende nutförmige Vertiefungen aufweist, die die Schwenklagerungen für die Gegenstände und die Führungsfläche für die beiden Kanten des unteren Randes der Gegenstände während der gesamten Schwenkbewegung bilden und die Gegenstände nur an ihrem unteren Rand festhalten.

Bei dieser Ausbildung verhindern somit die nutförmigen Vertiefungen des Bodens nicht nur ein Wegrutschen der Gegenstände, wie dies bei den bekannten Einrichtungen mit profiliertem Boden der Fall ist, sie bilden vielmehr unmittelbar am Boden ein Schwenklager für den jeweiligen Gegenstand, der sowohl in seiner nach hinten geneigten Schräglage als auch in seiner nach vorne gekippten Lage bloss in seinem unteren Randbereich im wesentlichen über seine ganze Breite in der nutförmigen Vertiefung in der Art einer Dreipunktabstützung (im Querschnitt gesehen) "eingespannt" oder "verkantet" und damit festgehalten wird, obgleich der Schwerpunkt des Gegenstandes oberhalb der Vertiefung und, in Draufsicht gesehen, auch ausserhalb hievon liegt. Dabei wird die Breite der nutförmigen Vertiefungen in Anpassung an die Dicke der Gegenstände gewählt, wobei der wirksame Abstand zwischen den jeweiligen Stützbereichen, die einander nicht horizontal gegenüber liegen müssen, sondern auch einander schräg gegenüber liegen und somit in verschiedenen Höhen an den Gegenständen angreifen können, nur geringfügig grösser als die Dicke der Gegenstände und insbesondere entsprechend dem gewünschten Winkel der Gegenstände in der jeweiligen Schräglage festgelegt wird. Auf diese Weise wird ein "Umblättern" der Gegenstände ermöglicht, ohne dass dabei Probleme, wie ein Herauskippen der Gegenstände aus den nutförmigen Vertiefungen, ein Verrutschen od. dgl., auftreten. Dadurch wird ferner der Vorteil erzielt, dass die Gegenstände auch beim "Blättern" schonend behandelt werden und insbesondere nicht gegeneinander scheuern, da sie in festen Abständen voneinander gehalten werden. Auch ist eine geordnete, sortierte Aufbewahrung der Gegenstände immer gewährleistet, unabhängig davon, ob einige Gegenstände aus einer Reihe fehlen oder nicht. Ferner wird eine einfache Konstruktion dadurch ermöglicht, dass nur ein entsprechend profilierter Boden vorzusehen ist, um die beschriebene Verschwenkbarkeit der Gegenstände zu ermöglichen.

Aus dem Vorstehenden ergibt sich bereits, dass es für eine dichtgedrängte Unterbringung von Gegenständen besonders vorteilhaft ist, wenn die querverlaufenden nutförmigen Vertiefungen des Bodens mit jeweils verschiedenen der paarweise zusammenwirkenden Stützbereiche die Gegenstände in den zwei verschiedenen Schräglagen abstützen und festhalten.

Vor allem, um die Gegenstände in ihren beiden Schräglagen besonders sicher festzuhalten, ist es erfindungsgemäss weiters von Vorteil, wenn der Boden als querverlaufende nutförmige Vertiefungen längs ihrer beiden Ränder hinterschnittene Nuten aufweist.

Für einen reibungslosen Bewegungsablauf beim Verschwenken der Gegenstände ist es besonders vorteilhaft, wenn die nutförmigen Vertiefungen zumindest abschnittsweise im Querschnitt kreisbogenförmig sind.

Eine vorteilhafte Weiterbildung ist hier ferner dadurch gekennzeichnet, dass die nutförmigen Vertiefungen zwei im Querschnitt kreisbogenförmige Abschnitte aufweisen, die voneinander durch eine mittige, im Querschnitt ungefähr dreieckförmige Abwälzerhebung getrennt sind. Durch diese mittigen Abwälzerhebungen wird einerseits eine Abstützung der Gegenstände beim Verschwenken im mittleren Bereich ihrer unteren Schmalseiten sowie auch, bei entsprechender Festlegung der Seitenflächen der Abwälzerhebungen, eine zusätzliche Fixierung der Gegenstände in ihren jeweiligen Schräglagen ermöglicht.

Es ist hier auch günstig, wenn die beiden im Querschnitt kreisbogenförmigen Abschnitte Teile von ein und derselben gedachten Zylinderfläche sind und somit eine gemeinsame Achse aufweisen. Die gemeinsame Zylinderachse stellt dabei in vorteilhafter Weise zugleich die Schwenkachse dar, um die die Gegenstände beim "Blättern" verschwenkt werden, so dass bei dieser Ausbildung die Gegenstände mit ihren unteren Kanten in jeder Phase der Bewegung beim Verschwenken oder Blättern geführt sind.

Es sei erwähnt, daß in der CH-A-262 708 eine Einrichtung zm Aufbewahren von Diapositiven geoffenbart ist, bei der in der einen der beiden gezeigten Ausführungsformen in einer mittigen Bodenleiste runde, nach oben offene Quernuten angebracht sind, in denen die Diapositive mit ihrem unteren Rand angeordnet werden. Zwischen den Quernuten sind nach oben spitzwinkelig verlaufende Trennungswände vorgesehen, auf denen sich die zwischen einer nach vorne geneigten und einer nach hinten geneigten Schräglage umklappbaren Diapositive in ihren jeweiligen Schräglagen abstützen. Dabei können die Diapositive jedoch aufgrund fehlender bzw. unzureichender Führung ihrer unteren Kanten in den Quernuten beim Umklappen leicht aus diesen Quernuten herausspringen.

Um die Positionen der Gegenstände in den einzelnen Schräglagen auch bei Berücksichtigung von etwaigen Fertigungstoleranzen besonders exakt festlegen zu können, ist es von Vorteil, wenn die Stützbereiche für die Gegenstände im Bereich der Nutränder paarweise zueinander parallel verlaufende Auflageflächen und Anschlagflächen besitzen, wobei die Auflageflächen schräg nach oben und die Anschlagflächen schräg nach unten gewandt sind. Zwischen diesen Auflageflächen und Anschlag- oder auch Niederhalteflächen ist der jeweilige Gegenstand in seiner vorderen oder aber auch hinteren Schräglage exakt festgelegt, und bei einer - auch dichten - Anordnung von mehreren Gegenständen in einer Reihe hintereinander sind alle diese Gegenstände mit ihren Hauptebenen im wesentlichen parallel zueinander angeordnet, so dass sie einander auch bei relativ grossen Höhen nicht beeinträchtigen können.

Zur Erzielung eines vorteilhaften Blickwinkels beim Betrachten der Vorderseiten der Gegenstände hat es sich als zweckmässig herausgestellt, wenn die Auflageflächen und Anschlagflächen einen Winkel von ungefähr 30° mit der Mitten- oder Symmetrieebene der jeweiligen Nut einschliessen.

Eine besonders vorteilhafte Ausführungsform der Erfindungsgemässen Einrichtung ist dadurch gekennzeichnet, dass die aufeinanderfolgenden Hinterschneidungen benachbarter Nuten für eine stufenförmig ansteigende bzw. abfallende Anordnung der Nuten gegenseitig in der Höhe versetzt sind. Bei dieser Ausführungsform kann eine besonders dichte Anordnung von Gegenständen in einer Reihe hintereinander erzielt werden, wobei dennoch für die die Nuten voneinander trennenden Wände oder Stege genügend Material verbleibt, um eine ausreichende Festigkeit auch über größere Längen sicherzustellen.

Um die Einrichtung bei der Anbringung in einem Schaugestell den jeweiligen Verhältnissen besser anpassen zu können (wobei zumeist eine ansteigende oder abfallende Anordnung der Gegenstände einer Reihe erwünscht sein wird, um die Gegenstände besser betrachten zu können), sowie insbesondere im Fall der vorstehend erwähnten, gegenseitig versetzten Hinterschneidungen ist es vorteilhaft, wenn die Mitten- oder Symmetrieebene jeder Nut um ungefähr 8° zur Senkrechten auf die Bodenebene der Einrichtung geneigt verläuft. Dadurch ist es beispielsweise möglich, die Nuten gemäß einer um 8° zur Horizontalen geneigten Ebene ansteigen oder aber abfallen zu lassen, wobei dennoch die Mitten- oder Symmetrieebenen der Nuten vertikal verlaufen, und wobei in der Folge die Winkel, die die Gegenstände mit ihren Hauptebenen in den beiden Schräglagen mit der Vertikalen einschließen, gleich groß sind und beispielsweise 30° betragen. Sofern bei dieser Ausführungsform jedoch die Bodenebene der Einrichtung horizontal angeordnet wird, so daß die Gegenstände alle in ein und derselben Höhe vorliegen, so ergeben sich für die beiden Schräglagen der Gegenstände verschiedene Winkel, z.B. 22° (30°-8°) bzw. 38° (30°+8°), was je nach der Bodenhöhe der Einrichtung, d.h. nach der Höhe der Einrichtung relativ zu einem Betrachter, für einen möglichst günstigen Überblick ausgenutzt werden kann.

Für eine Anordnung der Einrichtung in ungefährer Körperhöhe wird es häufig zweckmäßig sein, die Nuten gemäß einer horizontalen Ebene anzuordnen, wobei es auch vielfach erwünscht sein kann, gleiche Winkel in der vorderen bzw. hinteren Schräglage der Gegenstände vorzusehen. Für diesen Fall ist es zweckmäßig, wenn die Mitten- oder Symmetrieebene jeder Nut sekrecht zu der Bodenebene der Einrichtung verläuft.

Dabei wird auch eine gleichartige, symmetrische Ausbildung aller Nuten sowie der diese Nuten begrenzenden Wände ermöglicht, so dass auch die Herstellung eines so profilierten Bodens vereinfacht werden kann. Es ist hier daher weiters vorteilhaft, wenn die Nuten jeweils durch sich von unten nach oben zunächst gemäss Zylinderflächenabschnitten verjüngende und daran anschliessend wulstartig verdickte, symmetrisch ausgebildete Stege voneinander getrennt sind.

Die bisher beschriebenen Ausführungsformen eignen sich in gleicher Weise vorteilhaft für die Zurschaustellung bzw. Präsentation von CD-Kassetten, Videokassetten und auch Audiokassetten, wobei auch die verschiedenen Typen von Videokassetten ohne weiteres aufgenommen und in den nutartigen Vertiefungen eingereiht werden können. Für jene Art von Videokassetten, die in der Art eines Buches ausgebildet sind und flanschartig über den eigentlichen Kassettenkörper vorstehende Vorder- und Rückwände aufweisen, hat sich andererseits auch eine Ausführungsform als vorteilhaft erwiesen, die dadurch gekennzeichnet ist, dass die Vertiefungen je durch mittig angeordnete höckerartige Leisten unter Bildung von zwei zueinander parallel verlaufenden Teilnuten, je eine zur Aufnahme einer der überstehenden Kassetten-Wände, unterteilt sind. Bei dieser Ausbildung ragen somit die höckerartigen Leisten an der unteren Schmalseite der Videokassetten zwischen die Vorderwand und die Rückwand und erbringen so eine zusätzliche Stabilisierung.

Dabei ergibt sich weiters auch die Möglichkeit, diese Videokassetten in der jeweiligen Schräglage nur über eine der beiden Wände zu fixieren, beispielsweise in der nach hinten geneigten Schräglage über die hintere Wand oder Rückwand und in der nach vorne geneigten Schräglage über die Vorderwand. Demgemäss ist es erfindungsgemäss von Vorteil, wenn jeweils eine Seitenwand der Leiste und die ihr gegenüberliegende Seitenwand der Vertiefung die Stützbereiche für die Videokassette in einer ihrer beiden Schräglagen definieren.

Um auch hier die jeweilige Wand der Videokassette in ihrem unteren Bereich sicher niederhalten zu können, ist es ferner günstig, wenn zumindest die Seitenwände der Leiste mit Hinterschneidungen ausgebildet sind.

Um ferner bei dieser Ausführung die Videokassetten während ihrer Verschwenkung zu führen, ist es von Vorteil, wenn die Oberseite der höckerartigen Leisten zur Bildung einer Führungs-Gleitfläche für die Unterseite der jeweiligen Videokassette zwischen den überstehenden Vorder- und Rückwänden zylinderflächenförmig gewölbt ist.

Um eine möglichst einfache Ausbildung zu erzielen, ist es durchaus denkbar, die die Vertiefungen begrenzenden Seitenwände vertikal vorzusehen. Die höckerartigen Leisten können ferner auch einfach durch an einer Bodenplatte befestigte U-Profile gebildet sein.

Für das Festhalten der Videokassetten, insbesondere dann, wenn die Seitenwände der Leisten bzw. der Vertiefungen nicht hinterschnitten sein sollten, hat es sich auch als günstig erwiesen, wenn zumindest die Seitenwände der Leiste mit einem reibungserhöhenden Belag, z. B. einem Schaumkunststoff- Belag, versehen sind. Selbstverständlich ist es in diesen Fällen auch möglich, einen reibungserhöhenden Belag bzw. einen Schaumkunststoff-Belag auf der Gesamtfläche der nutartigen Vertiefungen, einschliesslich der höckerartigen Leisten, anzubringen.

Üblicherweise haben die genannten buchartigen Videokassetten mit überstehenden Vorder- und Rückwänden auch einen über ihren eigentlichen Kassettenkörper überstehenden, die Vorderwand und die Rückwand verbindenden Rücken. Um dieser Kassettenausbildung Rechnung zu tragen und in den nutartigen Vertiefungen Platz für den nach unten überstehenden Rücken zu schaffen, kann vorgesehen werden, dass sich die hökkerartigen Leisten nur über einen Teil der Länge der Vertiefungen erstrecken. Dies kann im Fall der vorstehend erwähnten Ausbildung mit U-Profilen, die an einer Bodenplatte befestigt sind, einfach dadurch bewerkstelligt werden, dass die die höckerartigen Leisten bildenden U-Profile kürzer gewählt werden als die Seitenwände der Vertiefungen.

Eine unterbrochene Ausbildung der mittig angeordneten höckerartigen Leisten kann auch auf andere Weise vorgesehen werden, etwa dann, wenn der Boden als Kunststoff-Formteil hergestellt wird, und überdies können auch Ausschnitte an den höckerartigen Leisten angebracht werden. Eine solche Ausführung ist insbesondere dann von besonderem Vorteil, wenn jeweils mehrere Videokassetten nebeneinander in einer durchgehenden Vertiefung, etwa über eine Breite von 1 m oder 120 cm, angeordnet werden, und demgemäss ist eine vorteilhafte Ausführungsform der erfindungsgemässen Einrichtung hier dadurch gekennzeichnet, dass die höckerartigen Leisten in Abständen ungefähr entsprechend der Breite der Videokassetten unterbrochen sind, beispielsweise ausgeschnitten sind, um die nach unten überstehenden Abschnitte der Rücken der Videokassetten aufzunehmen.

Wie bereits erwähnt, kann an sich der Boden der erfindungsgemässen Vorrichtung als Kunststoff-Formteil oder aber durch Anbringung von Profilschienen an einer ebenen Bodenplatte hergestellt werden. Um jedoch die Herstellung besonders einfach und preisgünstig zu gestalten, hat es sich als vorteilhaft erwiesen, wenn der Boden durch einen Strangprofilabschnitt, insbesondere aus Aluminium, gebildet ist. Derartige Bodenelemente, die durch Aluminium-Strangprofilabschnitte gebildet sind, eignen sich insbesondere für die Anwendung in Schaugestellen für CD-Kassetten.

Für die grösseren und schwereren Videokassetten hat sich andererseits eine Ausführung als günstig erwiesen, die dadurch gekennzeichnet ist, dass der Boden durch einen oder mehrere profilierte Blechabschnitte, z. B. aus Stahl, gebildet ist. Dabei ist es weiters vorteilhaft, nicht zu breite Blechabschnitte zu einem regalartigen Schaugestell für die Videokassetten zusammenzufügen, wobei hintereinander angeordnete Blechabschnitte einander mit hakenförmig gebogenen Rändern übergreifend miteinander verbunden werden.

Die vorstehend erwähnte Ausbildung der Bodenelemente als Strangprofilabschnitte kann auch dann Anwendung finden, wenn die Einrichtung für Heimmöbel vorgesehen wird, wie etwa im Fall der Anbringung eines derartigen Bodens in einer Lade eines Schubladenkastens, um so ein sortiertes, übersichtliches Aufbewahren der CD-Kassetten od. dgl. Gegenstände auch für den privaten Benutzer zu ermöglichen.

Insbesondere für Präsentationszwecke in Platten- oder Kassettengeschäften ist es andererseits von besonderem Vorteil, wenn die Länge der Vertiefungen für jeweils mehrere Gegenstände nebeneinander bemessen ist und wenigstens ein stab- oder schienenförmig ausgebildeter Teiler zur Trennung der so erhaltenen, nebeneinander vorgesehenen Reihen von hintereinander angeordneten Gegenständen an zumindest einigen der die nutförmigen Vertiefungen begrenzenden Wände befestigt ist.

Als Teiler könnten aber auch beispielsweise Trennplatten zwischen den Reihen von Gegenständen vorgesehen werden, die beispielsweise an einer Stirnwand und an einer Rückwand eines kistenförmigen Behälters oder Troges, in dem die erfindungsgemässe Einrichtung vorgesehen ist, befestigt werden. Vor allem aber, um unabhängig von derartigen Aufnahmebehältern und deren jeweiliger Ausbildung zu sein und einheitliche Teiler vorsehen zu können, ist es günstig, wenn der Teiler wie erwähnt stab- oder schienenförmig ausgebildet und an zumindest einigen der die nutförmigen Vertiefungen begrenzenden Wände befestigt ist.

Dabei ist es für eine einfache Anbringung weiters vorteilhaft, wenn in an sich bekannter Weise der z. B. aus Kunststoff bestehende Teiler mit von ihm abstehenden, paarweise angeordneten, elastisch auslenkbaren Schnappvorsprüngen zum Festklemmen auf den Wänden versehen ist. Diese Ausführung ist besonders dann günstig, wenn die Einrichtung zur Aufnahme von CD-Kassetten bestimmt ist, so dass eine geringere Beanspruchung der Teiler zu erwarten ist.

Im Fall der Unterbringung von Videokassetten in der Einrichtung kann sich eine feste Verbindung der Teiler als vorteilhafter erweisen, und es ist demgemäss eine günstige Ausführungsform der erfindungsgemässen Einrichtung dadurch gekennzeichnet, dass der Teiler durch Anschweissen, Anlöten oder Ankleben fest mit den Wänden verbunden ist.

Andererseits ist es jedoch auch möglich, zur Trennung von nebeneinander in den nutförmigen Vertiefungen vorgesehenen Gegenständen innerhalb der nutförmigen Vertiefungen z. B. noppenartige Anschlagvorsprünge für die Gegenstände vorzusehen. Bei dieser Ausführung liegen somit die Gegenstände seitlich an den Anschläge für sie darstellenden Vorsprüngen an, so dass eine weitere seitliche Verschiebung und damit ein "aus der Reihe kommen" vermieden wird. Eine solche Ausbildung ist dann zweckmässig, wenn der Boden als Kunststoff-Formteil hergestellt wird.

Wie bereits erwähnt, kann die erfindungsgemässe Einrichtung in Schubladen oder Auszügen untergebracht werden, wie etwa für die Aufnahme von Kassetten bei Privatpersonen. Auch kann die erfindungsgemässe Einrichtung als Einsatzteil (Einsatzboden) für herkömmliche Aufnahmetröge od. dgl. in Geschäftslokalen vorgesehen werden. Mit besonderem Vorteil lässt sich jedoch die erfindungsgemässe Einrichtung bei schrankartigen Schaugestellen verwenden, wobei dann mehrere Einrichtungen hintereinander und gegebenenfalls übereinander angeordnet werden können. Dabei hat sich insbesondere jene Ausführungsform der erfindungsgemässen Einrichtung als günstig erwiesen, bei der die Nuten in einer stufenförmig ansteigenden bzw. abfallenden Anordnung vorgesehen sind, da diese ansteigende bzw. abfallende Anordnung zugleich für eine optimale Platzausnutzung im Schaugestell unter Beibehaltung einer guten Überblicksmöglichkeit für einen Betrachter ausgenutzt werden kann.

Demgemäss bezieht sich die Erfindung auch auf eine Anordnung mit mehreren erfindungsgemässen Einrichtungen in einem Schaugestell, und eine derartige Anordnung ist erfindungsgemäss dadurch gekennzeichnet, dass die Einrichtungen im unteren Bereich des in Seitenansicht in an sich bekannter Weise ungefähr hohlspiegelartig ausgebildeten Schaugestells jeweils mit schräggestelltem Boden, mit nach hinten abfallender Anordnung der Nuten und jeweils in gleicher Höhe beginnenden Böden, hintereinander vorgesehen sind, wobei die Gegenstände in der vorderen Schräglage einen kleineren Winkel mit der Vertikalen als in der hinteren Schräglage einschliessen und der Höhenunterschied zwischen dem hinteren Ende des Bodens einer Einrichtung und dem vorderen Ende des Bodens der nächstfolgenden Einrichtung ungefähr gleich der Höhe eines Gegenstandes in der nach hinten geneigten Schräglage ist.

Es sei hier erwähnt, dass bereits ein in Seitenansicht ungefähr hohlspiegelartig ausgebildetes Schaugestell, mit regalartig angeordneten horizontalen Reihen von Aufnahmefächern im oberen Gestellbereich, vorgeschlagen worden ist (DE-GbM 84 19 448), wobei dort allerdings im unteren Gestellbereich kistenförmige, horizontale Aufnahmeabteile stufenförmig ansteigend hintereinander vorgesehen sind. Diese Gestellausbildung hat sich als recht günstig erwiesen, und durch die erfindungsgemässe Ausbildung mit der Schrägstellung der durch jeweils eine erfindungsgemässe Einrichtung gebildeten Aufnahmeabteilreihen, die auf der angegebenen, stufenförmig ansteigenden bzw. abfallenden Anordnung der Nuten basiert, wird nun einerseits der Vorteil einer noch besseren Platzausnutzung, mit der Unterbringung von noch mehr Kassetten, sowie andererseits der Vorteil einer weiter verbesserten Erreichbarkeit der CD-Kassetten in den Aufnahmeabteilen erzielt.

Zusätzlich kann die Platzausnutzung noch weiter verbessert werden, wenn über der hintersten Einrichtung zwei weitere Einrichtungen vorgesehen sind, von denen die untere ebenfalls mit nach hinten abfallendem Boden und die obere mit nach hinten ansteigendem Boden angeordnet ist.

Vorstehend wurde bereits erwähnt, dass der Boden der vorliegenden Einrichtung ausser z. B. als Aluminiumstrangprofilabschnitt oder als profilierter Blechteil auch als Kunststoffteil hergestellt werden kann. Dabei bietet sich an sich das Tiefziehen bzw. Vakuumformen einer Folie aus thermoplastischem Kunststoffmaterial an, was jedoch im Fall der erwähnten Ausbildung der nutförmigen Vertiefungen mit hinterschnittenen Rändern problematisch ist. Allgemein wird beim Vakuumverformen eine Folie oder Platte aus thermoplastischem Kunststoff zunächst erwärmt und sodann zur Form hin bewegt und dabei entsprechend der ungefähren Gestalt der Form verformt. Die endgültige Gestalt erhält das Kunststoffmaterial durch enges Andrücken gegen die Formoberfläche durch Anlegen eines Vakuums an die Form bzw. an darin vorgesehene Saugkanäle, so dass das Kunststoffmaterial innig gegen die Formoberfläche gesaugt wird. Nach Abkühlen und Festwerdenlassen des Kunststoffmaterials kann der erhaltene Gegenstand von der Form abgenommen werden. Um Gegenstände mit hinterschnittenen Bereichen herzustellen, wird üblicherweise die Form geteilt, wobei die Formteile beim Abnehmen der geformten Gegenstände unabhängig voneinander verstellt werden können, um den hinterschnittenen Bereich des Gegenstandes freizugeben, so dass die "Verriegelung" der Hinterschneidung an der Form aufgehoben wird. Derartige geteilte Formen sind jedoch aufwendig und teuer in der Herstellung wie auch im Betrieb.

Gegenstand der Erfindung ist daher auch ein Verfahren zur Herstellung von erfindungsgemässen Einrichtungen, wie angegeben, mit dem auf einfache Weise Hinterschneidungen an den Nuträndern von vakuumgeformten Einrichtungen, d. h. Bodenteilen, hergestellt werden können, wobei nichtsdestoweniger die Gegenstände problemlos von der Form abgenommen werden können. Dabei soll weiters dem Umstand Rechnung getragen werden, dass derartige vakuumgeformte Bodenteile eine ausreichende Festigkeit aufweisen müssen, um mehrere Reihen von z. B. Videokassetten aufnehmen zu können.

Demgemäss ist das erfindungsgemässe Verfahren dadurch gekennzeichnet, dass eine Folie aus thermoplastichem Kunststoffmaterial erwärmt und mit Hilfe von Unterdruck an eine mit Saugkanälen versehene Form angedrückt wird, an der zuvor entsprechend den hinterschnittenen Nuträndern geformte, z. B. abgewinkelte Stützleisten, z. B. aus Stahlblech oder Kunststoff, lösbar angebracht wurden, wobei die Folie beim Ansaugen an die Form um diese Stützleisten herum verformt wird, und dass danach die verformte Folie abgekühlt und zusammen mit den Stützleisten von der Form abgenommen wird. Bei dieser Herstellungstechnik wird somit eine zum hinterschnittenen Nutrandbereich konforme Stützleiste als "verlorener Formteil" eingesetzt, und an diese verlorenen Formteile legt sich die Folie beim Ansaugen an die Form an, wobei sie entsprechend diesen Stützleisten verformt wird und so die gewünschte hinterschnittene Gestalt erhält. Dabei ist sicherlich darauf zu achten, dass das Vakuum bzw. der Unterdruck in der Nähe der Stützleisten angelegt wird, um so die Folie auch gegen die Stützleisten zu saugen, und demgemäss ist es günstig, wenn in der Form zumindest einige der Saugkanäle benachbart den Vertiefungen für die Schaftbereiche der Stützleisten an der Formoberfläche münden.

Nach Festwerden des Kunststoffmaterials wird der vakuumgeformte Bodenteil zusammen mit den - nunmehr einen Teil von ihm bildenden - Stützleisten von der Form abgenommen. Dabei wird zusätzlich zu dem Vorteil, dass für die Herstellung der Bodenteile mit hinterschnittenen Nuträndern eine einfache Form verwendet werden kann, der weitere Vorteil erzielt, dass die Stützleisten eine "Armierung" für den Bodenteil bilden, so dass die so hergestellten Bodenteile eine erhöhte Festigkeit, Steifigkeit etc. aufweisen. Dadurch sind für die Bodenteile Abmessungen von z. B. 100 x 40 cm ohne weiteres möglich.

An sich wäre es denkbar, die jeweiligen Stützleisten von den Stirnseiten her an der Form festzuklemmen oder aber mit Hilfe eines lösbaren Haftmittels, wie z. B. eines Wachses, an der Form lösbar anzubringen. Für eine besonders einfache Anbringung und Abnahme ist es jedoch günstig, wenn die Stützleisten jeweils mit einem Schaftbereich in eine Vertiefung in der Form eingesetzt werden.

Sofern dann der Schaftbereich an der Unterseite des hergestellten Bodenteiles nicht stören sollte, kann er ohne weitere Bearbeitung belassen werden. Es kann jedoch auch günstig sein, wenn nach Abnahme des vakuumgeformten Bodenteiles von der Form die abstehenden Schaftbereiche der Stützleisten abgetrennt werden. Das Abtrennen kann dabei etwa durch Abschneiden der Abschleifen bewerkstelligt werden.

Weiters hat es sich erfindungsgemäss als vorteilhaft erwiesen, wenn auf die Stützleisten vor dem Ansaugen der Folie ein Haft- oder Bindemittel, z. B. ein Klebstoff, aufgebracht wird, um die Bindung zwischen den Stützleisten und dem Kunststoffmaterial der angesaugten Folie zu verstärken.

Auch ist es von Vorteil, wenn die Bindung zwischen den aus Kunststoff hergestellten Stützleisten und dem Kunststoffmaterial der vakuumverformten Folie durch Verschweissen verstärkt wird.

Dabei besteht eine günstige Möglichkeit darin, dass die Bindung durch Ultraschallschweissen verstärkt wird.

Bei der für das erfindungsgemässe Verfahren zu verwendenden Form erstrecken sich die Vertiefungen zweckmässig im wesentlichen entsprechend der Richtung, in der der vakuumgeformte Bodenteil von der Form abgenommen wird, von der Formoberfläche her in die Form hinein. Auf diese Weise wird eine besonders einfache, leichte Abnahme des hergestellten Bodenteiles von der Form sichergestellt, wenngleich es an sich sicherlich auch möglich wäre, im Fall von innerhalb gewisser Grenzen elastischen Stützleisten die Vertiefungen auch unter einem Winkel zur Richtung der Abnahme der Bodenteile von der Form verlaufen zu lassen, wobei sich dann bei der Abnahme der Bodenteile die Stützleisten, d. h. deren Schaftbereiche, elastisch verbiegen würden.

Die Erfindung wird nun nachstehend anhand von in der Zeichnung dargestellten Ausführungsbeispielen noch weiter erläutert.

Im einzelnen zeigen in der Zeichnung:
Fig. 1 eine schematische Vorderansicht einer Einrichtung zur Aufnahme und Zurschaustellung von CD-Kassetten;
Fig. 2 in grösserem Massstab einen Längsschnitt durch diese Einrichtung, gemäss der Linie II-II in Fig. 1;
Fig. 3 einen Teil-Schnitt dieser Einrichtung in grösserem Massstab, zur Verdeutlichung der Ausbildung der die CD-Kassetten aufnehmenden Nuten;
Fig. 4 einen Querschnitt durch einen stabförmigen Teiler, wie er gemäss Fig. 1 und 2 vorgesehen ist, gemäss der Linie IV-IV in Fig. 2;
Fig. 5 eine der Fig. 3 entsprechende Schnittdarstellung einer abgewandelten Ausführungsform;
die Fig. 6 und 7 den Darstellungen in den Fig. 3 und 5 entsprechende Schnittdarstellungen von drei weiteren Ausführungsformen, die insbesondere für die Aufnahme von Videokassetten gedacht sind;
die Fig. 8 und 9 je eine schematische Ansicht eines Schaugestells mit einer Anordnung von erfindungsgemäss ausgebildeten Einrichtungen zur Aufnahme von CD-Kassetten (Fig. 8) bzw. Videokassetten (Fig. 9);
Fig. 10 in einer Prinzipdarstellung ganz schematisch eine bekannte Anordnung zum Vakuumformen von Kunststoffolien, und
Fig. 11 in einer Detail-Schnittdarstellung einen Teil einer Form mit daran lösbar angeordneten Stützleisten und einer darum herum zur Herstellung einer Einrichtung in Form eines Profilbodenteiles gemäss Fig. 6 vakuumverformten thermoplastischen Kunststoffolie.

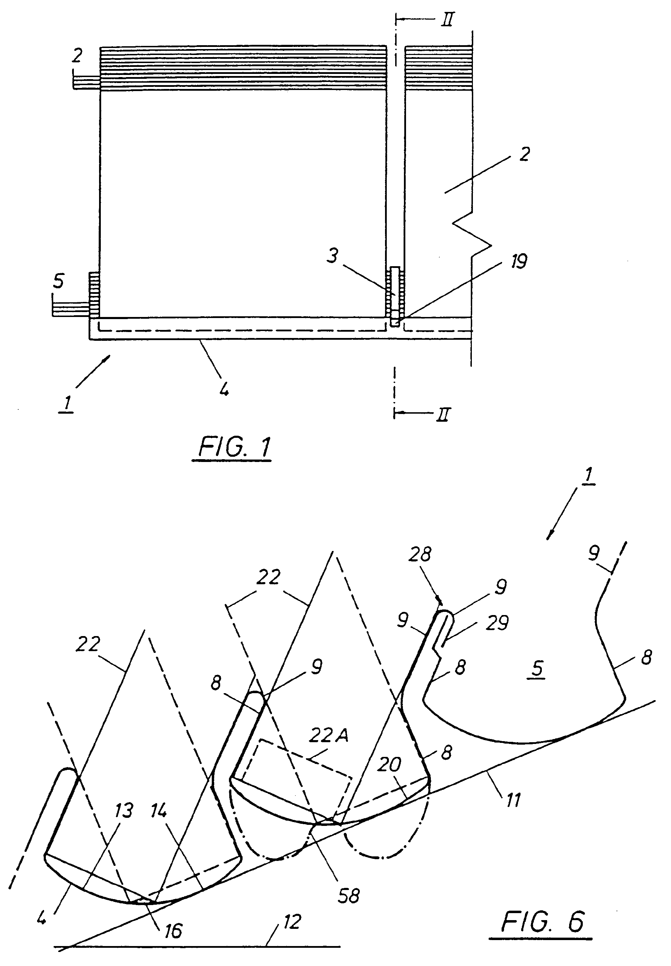

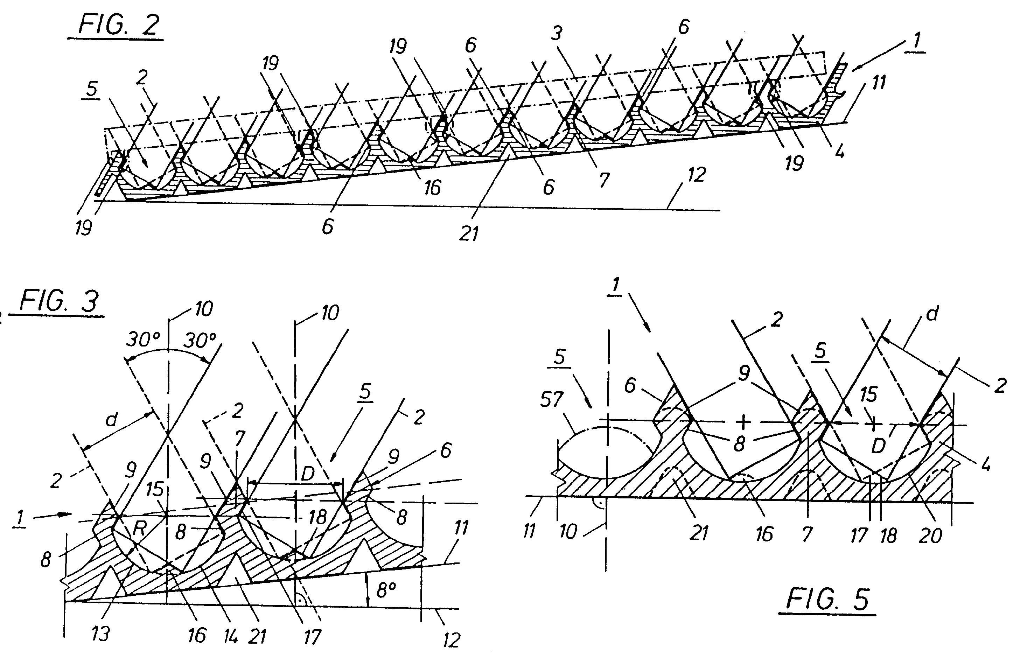

Bei der in den Fig. 1 bis 3 veranschaulichten, besonders bevorzugten, allgemein mit 1 bezeichneten Einrichtung sind mehrere Reihen von hintereinander angeordneten CD-(Compact-Disc)-Kassetten als steife, flache Gegenstände in im wesentlichen aufrechten Schräglagen untergebracht und zur Schau gestellt. In Fig. 1 sind dabei in einer Teil-Ansicht schematisch zwei Reihen von CD-Kassetten 2 angedeutet, wobei gemäss Fig. 2 jede Reihe elf CD-Kassetten 2 hintereinander enthalten kann; selbstverständlich sind jedoch in einem Schaugestell, einem Ständer oder Kasten od. dgl. Vorrichtung noch weitere Reihen, beispielsweise insgesamt zehn oder zwölf Reihen nebeneinander, denkbar. Diese Reihen werden zweckmässigerweise durch sich zwischen den Reihen erstreckende schienen- oder stabförmige, in Fig. 1 und 2 schematisch eingezeichnete Teiler 3 voneinander getrennt gehalten; diese Teiler 3 werden nachstehend noch näher erläutert werden.

Die Einrichtung 1 besteht im wesentlichen aus einem ein bestimmtes, aus Fig. 2 ersichtliches Profil aufweisenden Boden 4, der sich vorzugsweise über die gesamte Breite aller Reihen zusammen erstreckt und so eine Längserstrekkung, gemäss der Darstellung in Fig. 2 in Richtung senkrecht zur Zeichenebene, von beispielsweise 120 cm aufweisen kann. Es sei hier erwähnt, dass die Darstellung in Fig. 2 ungefähr die natürliche Grösse der Querschnittsabmessungen des Bodens 4 und der CD-Kassetten 2 (von denen nur der untere Bereich ersichtlich ist) wiedergibt. Der Boden 4 weist mehrere, im vorliegenden Beispiel elf, hintereinanderliegende nutförmige Vertiefungen 5, nachstehend Nuten 5 genannt, auf, die dazu dienen, die unteren Schmalseiten und Randbereiche der CD-Kassetten 2 aufzunehmen und als Schwenklagerungen für diese CD-Kassetten 2 und deren Abstützung bloss von deren unterem Randbereich her zu dienen, wobei sie die CD-Kassetten sowohl in einer nach hinten geneigten Normal-Schräglage, die in Fig. 2 mit ausgezogenen Linien veranschaulicht ist, als auch in einer nach vorne verschwenkten, in Fig. 2 mit gestrichelten Linien veranschaulichten Schräglage festhalten und nicht nur gegen ein Verrutschen, sondern auch gegen ein Herauskippen sichern. Dabei wird in jeder Schräglage eine Abstützung der jeweiligen CD-Kassette 2 an drei Stellen bewirkt, nämlich im Bodenbereich der Nut 5 einerseits sowie in den oberen Randbereichen der die Nuten begrenzenden, einander gegenüberliegenden Seiten- oder Stützwände 6 andererseits, wobei in der nach hinten geneigten Schräglage und in der nach vorne geneigten Schräglage der CD-Kassetten jeweils andere Stützbereiche zur Wirkung kommen, wie nachstehend anhand der Fig. 3 noch näher dargelegt werden wird.

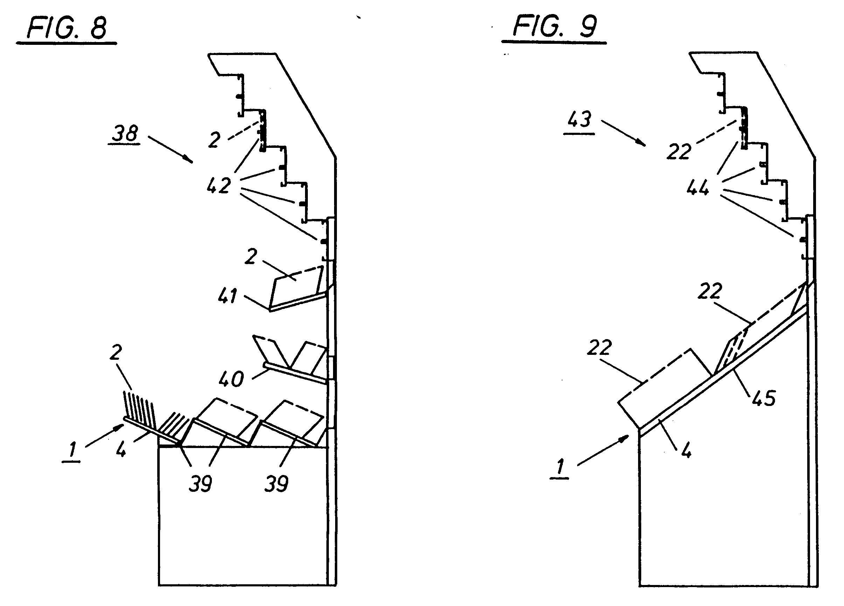

Wie aus Fig. 2 und insbesondere aus Fig. 3 ersichtlich ist, sind die Nuten 5 durch Wände in Form von abgewinkelten Stegen 7 voneinander getrennt, wobei diese Stege 7 die zuvor erwähnten Stützwände 6 bilden, die die Nuten 5 begrenzen. Dabei sind an jeder Längsseite einer Nut 5 zwei Stützbereiche übereinander vorgesehen, nämlich eine untere, schräg nach unten weisende Anschlagfläche 8, die auch als Niederhaltefläche bezeichnet werden kann, und eine darüber befindliche, schräg nach oben weisende Auflagefläche oder Abstützfläche 9, auf der die CD-Kassette 2 schräg aufliegt. Dabei ist jeweils die Anschlagfläche 8 an einer Längsseite einer Nut 5 parallel zur Auflagefläche 9 an der gegenüberliegenden Längsseite dieser Nut, wobei diese Flächen 8, 9 bzw. durch sie gelegte, gedachte Verlängerungsebenen jeweils einen Winkel von 30° mit einer in Fig. 3 vertikal eingezeichneten Mitten- oder Symmetrieebene 10 der Nuten 5 einschliessen. Diese Mittenebene 10 kann deshalb auch als Symmetrieebene bezeichnet werden, da im vorliegenden Ausführungsbeispiel, wie aus Fig. 3 zu erkennen ist, die Nuten 5 je bezüglich dieser Ebene 10 vom Nutboden beginnend bis zur Auflagefläche 9 symmetrisch ausgebildet sind, wobei nur die jeweils rechte Auflagefläche 9 im Vergleich zur linken Auflagefläche verlängert ist. Diese Verlängerung ergibt sich deshalb, da beim Ausführungsbeispiel gemäss Fig. 2 und 3 die Nuten 5 hintereinander stufenförmig ansteigend angeordnet sind, so dass die Hinterschneidungen oder hinterschnittenen Ränder der Nuten 5, die durch die schräg nach unten weisenden Anschlagflächen 8 definiert sind, bei benachbarten Nuten 5 höhenmässig gegeneinander versetzt sind. Dadurch erhalten auch die die Nuten 5 voneinander trennenden Stege 7 ein abgewinkeltes Aussehen. Die Nuten 5 steigen gemäss einer Bodenebene 11 der Einrichtung 1 an, die im vorliegenden Fall z. B. die Unterseite des Bodenteiles 4 bildet und um 8° zur horizontalen Ebene 12 geneigt verläuft, wobei die horizontale Ebene 12 senkrecht auf die vorstehend genannten Mittenebenen 10 steht. Bei dieser Anordnung ergibt sich somit, dass die CD-Kassetten 2 sowohl in der hinteren Normal-Schräglage als auch in der nach vorne gekippten Schräglage einen Winkel von 30° zur Vertikalen aufweisen. Sofern der Boden 4 mit der Ebene 11 horizontal ausgerichtet angeordnet werden sollte (so dass gemäss der Darstellung in Fig. 3 die Mittenebene 10 um einen Winkel von 8° zur Vertikalen nach rechts geneigt wäre), würden die CD-Kassetten 2 in der einen Schräglage, beispielsweise der hinteren Schräglage (wenn die rechte Seite gemäss der Darstellung in Fig. 2 und 3 als die hintere Seite der Einrichtung 1 angesehen wird), einen Winkel von 38° mit der Vertikalen einschliessen, d. h. etwas stärker schräg gestellt sein, wogegen sie in der anderen (z. B. vorderen) Schräglage einen Winkel von bloss 22° mit der Vertikalen einschliessen würden, d. h. steiler gestellt wären. Eine solche Anordnung kann beispielsweise dann vorgesehen werden, wenn die Einrichtung 1 an einer relativ tief liegenden Stelle in einem Gestell oder Kasten untergebracht wird, wo eine Betrachtung von einem höher liegenden Punkt aus gegeben ist, hingegen könnte eine umgekehrte Anordnung (wobei dann im zuletzt erwähnten Beispiel die in Fig. 3 linke Seite die hintere Seite der Einrichtung 1 wäre) dann gewählt werden, wenn sich die Einrichtung in grösserer Höhe, insbesondere in Augenhöhe befindet, wo es dann vorteilhaft ist, wenn die nach vorne "aus dem Weg" geschwenkten CD-Kassetten 2 flacher angeordnet sind, um einen besseren Einblick auf die dahinter befindlichen, in der nach hinten geneigten Schräglage steiler angeordneten CD-Kassetten 2 zu ermöglichen. Von diesen speziellen Eigenschaften der beschriebenen Einrichtung 1 kann bei den nachstehend noch näher erläuterten Anordnungen im Schaugestell gemäss Fig. 8 mit Vorteil Gebrauch gemacht werden.

Die Nuten 5 weisen gemäss Fig. 3 einen im Querschnitt im wesentlichen kreisbogenförmigen Boden auf, wobei genaugenommen zwei im Querschnitt kreisbogenförmige Abschnitte 13, 14 vorgesehen sind, die eine gemeinsame Achse 15 besitzen und voneinander durch eine im Querschnitt dreieckförmige Erhebung 16 getrennt sind. Diese mittig in der Nut 5 vorgesehene Erhebung 16 bildet eine Abwälzerhebung, um die jeweilige CD-Kassette 2 während der Schwenkbewegung aus der einen Schräglage in die andere an ihrer Schmalseite abzustützen und zu führen, und sie stellt zugleich einen Anschlag für die untere Kante 17 bzw. 18 der CD-Kassette 2 in der jeweiligen Schräglage dar, um so für eine zusätzliche Festlegung der CD- Kassette 2 in ihrer Schräglage zu sorgen. An sich könnten jedoch diese Abwälzerhebungen 16, wie in Fig. 3 mit gestrichelter Linie angedeutet ist, auch weggelassen werden, wobei dann die Nuten jeweils mit einem einzigen, im Querschnitt kreisbogenförmigen Abschnitt oder Boden (d. h. einem Zylinderflächenabschnitt) ausgebildet sind. Für einen ruhigen, reibungslosen Bewegungsablauf bei der Verschwenkung der CD-Kassetten 2 ist auch von Bedeutung, dass die erwähnte gemeinsame Achse 15 zugleich (zumindest ungefähr) die Schwenkachse für die CD-Kassette 2 darstellt, die dadurch gekennzeichnet ist. dass der im Querschnitt kreisbogenförmige Nutboden eine Führungs- oder Gleitfläche für die beiden unteren Kanten 17, 18 der CD-Kassetten 2 bildet.

Der Radius R der im Querschnitt kreisbogenförmigen Abschnitte oder des Bodens 13, 14 der jeweiligen Nut 5 beträgt beispielsweise 7,2 mm, und der Abstand d zwischen den sich zueinander parallel erstreckenden, durch die Anschlagfläche 8 an der einen Seitenwand 6 der Nut 5 und die Auflagefläche 9 an der gegenüberliegenden Seitenwand 6 der Nut verlaufenden Ebenen beträgt entsprechend der Dicke der CD-Kassetten 2 ca. 10 bis 10,5 mm, insbesondere 10,4 mm. Für den wirksamen Abstand D zwischen den beiden Stützbereichen jeweils eines Paares, d. h. der Breite der Öffnung einer jeden Nut 5, ergibt sich somit im Fall eines Winkels von 30° für die CD-Kassetten in der jeweiligen Schräglage ein Wert von ungefähr 12 mm.

Zu erwähnen ist schliesslich zur Ausführungsform gemäss den Fig. 1 bis 3 noch, dass - wie auch aus Fig. 3 zu erkennen ist - bei jeder Nut 5 die gemeinsame Achse 15, die zugleich wie erwähnt die Schwenkachse für die CD-Kassetten 2 ist, in der durch die beiden Schnittlinien zwischen den Anschlagflächen 8 und Auflageflächen 9 verlaufenden Ebene gelegen ist, die parallel zur Ebene 12 verläuft.

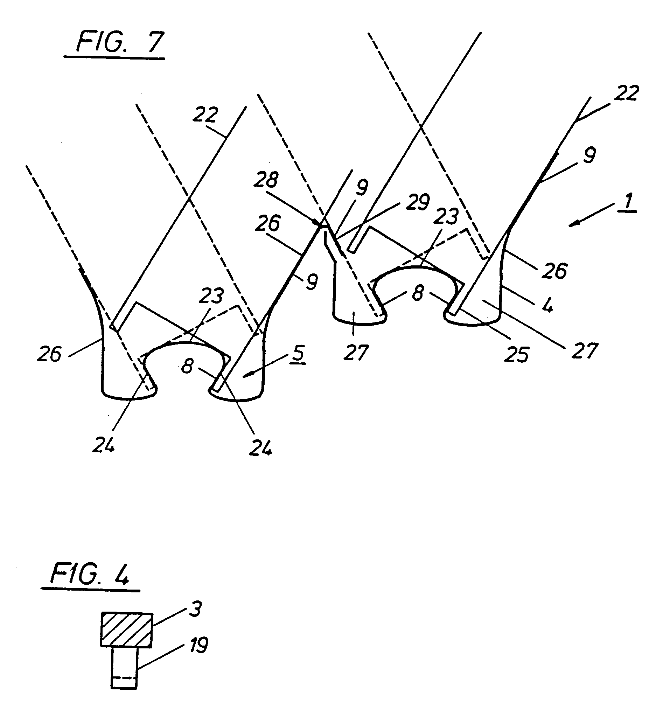

Wie bereits erwähnt wurde, sind die Reihen von CD-Kassetten 2 voneinander durch die zwischen ihnen angeordneten Teiler 3 getrennt. Ein solcher Teiler 3 ist auch in Fig. 2 schematisch mit strichpunktierten Linien angedeutet, wobei zu erkennen ist, dass dieser Teiler 3 stab- oder schienenförmig ausgebildet ist. Der Teiler 3 besitzt paarweise angeordnete, nach unten abstehende, elastisch auslenkbare, lappenartige Schnappvorsprünge 19, mit denen er auf den Stegen 7 elastisch festgeklemmt ist. Dabei ist es möglich, den Teiler 3 derart mit Schnappvorsprüngen 19 zu versehen, dass er auf allen Stegen 7 fixiert werden kann, es können jedoch, wie in Fig. 2 gezeigt, auch weniger Paare von Schnappvorsprüngen 19 vorgesehen werden, um den Teiler 3 an nur einzelnen der Stege oder Wände 7 zwischen den Nuten 5 anzubringen. In Fig. 4 ist der stabförmige Teiler 3 im Schnitt schematisch veranschaulicht, wobei auch die (beispielsweise angeklebten oder angeschweissten) federnden Schnappvorsprünge 19 als lappenartig bis fingerartig erkennbar sind. Vorzugsweise bestehen die Teiler 3 aus Kunststoff.

Der Boden 4 ist dagegen zweckmässigerweise ein Aluminium-Strangprofilabschnitt mit der gewünschten Länge, z. B. wie erwähnt 120 cm. Dieser längliche Strangprofilabschnitt kann an seinen beiden Stirnseiten in an sich herkömmlicher Weise an Seitenwänden eines Gestells befestigt werden, was vom Fachmann ohne weiteres durchgeführt werden kann und in der Zeichnung nicht näher veranschaulicht ist.

Eine im Prinzip der Einrichtung gemäss Fig. 1 bis 3 ähnliche Ausführungsform ist in einer der Darstellung in Fig. 3 entsprechenden Schnittdarstellung in Fig. 5 gezeigt. Die Ausführungsform gemäss Fig. 5 unterscheidet sich insofern von jener gemäss Fig. 3, als nun die Nuten 5 alle in derselben Höhe angeordnet sind, mit anderen Worten, die Nuten 5 sind gemäss einer Bodenebene 11 (= Unterseite des Bodens 4) angeordnet, die senkrecht zu den Mitten- oder Symmetrieebenen 10 der Nuten 5 verläuft. Demgemäss sind die durch die schräg nach unten weisenden Anschlagflächen 8 definierten Hinterschneidungen der Nuten 5 nicht - wie in Fig. 3 - höhenmässig gegeneinander versetzt, und dies führt dazu, dass die Teilung der Nuten 5, d. h. der Abstand zwischen den Nuten, etwas grösser ist als im Ausführungsbeispiel gemäss Fig. 3, da aus Festigkeitsgründen eine gewisse Mindestmaterialstärke für die Stege oder Wände 7 zwischen den Nuten 5 erforderlich ist, und diese Mindeststärke in der Höhe der Hinterschneidung massgeblich ist, also dort, wo die Anschlagflächen 8 an den im Querschnitt z. B. ebenfalls kreisbogenförmigen Nutbodenabschnitt 20 anschliessen. Im übrigen sind die Anschlagflächen 8 beispielsweise wieder eben ausgeführt, und sie können insbesondere unter 30° zur Vertikalen geneigt sein. Als Auflageflächen 9 können, wie mit ausgezogenen Linien in Fig. 5 angedeutet ist, ebenfalls ebene Flächen, ähnlich wie in Fig. 3, vorgesehen sein, es ist jedoch auch möglich, diese Auflageflächen oder Stützbereiche 9 dadurch zu bilden, dass die Stege 7 an ihrer Oberseite abgerundet sind, wie in Fig. 5 mit gestrichelten Linien angedeutet ist, wobei schmälere Auflageflächen 9, im Extremfall linienförmige Auflagebereiche, erhalten werden. Im Querschnitt gesehen, erhalten somit die Stege 7 ein kegelförmiges Aussehen, mit sich verjüngenden Zylinderflächenabschnitten im unteren Bereich und einem daran anschliessenden, wulstartig verdickten Kopf. Zu erwähnen ist hier ferner noch, dass im Unterschied zu Fig. 3 nun auch die Stege 7 bezüglich einer vertikalen Mittenebene symmetrisch ausgebildet sein können bzw. sind. Im übrigen gilt auch für die Ausführungsform gemäss Fig. 5, dass der wirksame Abstand D zwischen den jeweiligen Stützbereichen entsprechend dem gewünschten Winkel der CD-Kassetten 2 in der jeweiligen Schräglage und geringfügig grösser als die Dicke d der Kassetten 2 gewählt wird. Ferner trifft auch auf Fig. 5 zu, dass die Achse 15 des Zylinderflächenabschnittes 20 (d. h. des Nutbodens) zugleich die Achse für die Schwenkbewegung der CD-Kassetten 2 definiert, wobei die beiden unteren Kanten 17, 18 der CD-Kassetten 2 bei der Schwenkbewegung durch diesen Zylinderflächenabschnitt 20 gleitend geführt werden. Selbstverständlich kann, falls dies erwünscht ist, auch bei der Ausführungsform gemäss Fig. 5 in jeder Nut 5 eine mittlere, im Querschnitt dreieckförmige Abwälzerhebung ähnlich der Erhebung 16 gemäss Fig. 3 vorgesehen sein, wie in Fig. 5 bei der mittleren Nut 5 mit gestrichelter Linie schematisch angedeutet ist. Ferner kann der Boden 4 bzw. die Einrichtung 1 wie in Fig. 3 gezeigt aus Materialersparnisgründen an der Unterseite mit ausgenommenen nutförmigen Bereichen 21 versehen sein, und eine ähnliche Unterseitenausbildung ist in Fig. 5 mit gestrichelten Linien angedeutet. Zweckmässigerweise besteht auch der Boden 4 gemäss Fig. 5 aus einem Aluminium-Strangprofilabschnitt.

Die bisher beschriebenen Ausführungsformen der erfindungsgemässen Einrichtung sind in erster Linie wie erwähnt für die Aufnahme von CD-Kassetten gedacht, die relativ dünn (ca. 10 mm) sind und eine verhältnismässig geringe Masse aufweisen. Die beschriebenen Einrichtungen können dabei für Präsentationsvorrichtungen in Geschäftslokalen ebenso wie für Heimmöbel Anwendung finden. Insbesondere ist es für den letzteren Fall möglich, den Boden 4, vorzugsweise einen diesen bildenden Aluminium-Strangprofilabschnitt, mit einem Auszug zu verbinden, der in einem Schrank oder in einer Anrichte untergebracht wird, um so im privaten Gebrauch CD-Kassetten sortiert und gut überschaubar aufzubewahren. Dabei eignet sich auch für diese Anwendung die Ausführung gemäss Fig. 1 bis 3 mit besonderem Vorteil, wobei die bereits beschriebene Anordnung getroffen wird, gemäss der die gedachte Ebene 11, die der Anordnung der Nuten 5 folgt, horizontal angeordnet wird, so dass die CD-Kassetten 2 in der Ruhestellung flacher angeordnet sind und somit eine geringere Höhe erfordern, während sie im herausgezogenen Zustand der Einrichtung, beim Blättern, ohne Schwierigkeiten steiler aufgestellt, d. h. in die vordere Schräglage geschwenkt werden können.

Die nun zu beschreibenden Ausführungsformen gemäss den Fig. 6 und 7 sind dagegen insbesondere für die Unterbringung von Videokassetten 22 bzw. den sogenannten Video-Buch-Boxen (d. h. buchartige Videokassetten mit flanschartig an der Oberseite, an der einen Längsseite und an der Unterseite über den eigentlichen Kassetten- oder Boxkörper überstehenden Vorderwänden und Rückwänden sowie einem diese beiden Wände miteinander verbindenden Rücken, der ebenfalls oben und unten über den Kassettenkörper übersteht) gedacht. Das vorstehend anhand der Fig. 1 bis 3 ausführlich beschriebene Prinzip der Schwenkabstützung der Kassetten oder Boxen bloss im unteren Randbereich in nutförmigen Vertiefungen. die entsprechende Stützbereiche aufweisen, trifft jedoch auch auf diese Ausführungsformen in entsprechender Weise zu, so dass sich eine Wiederholung dieser Beschreibung erübrigt. Bei der Dimensionierung der Nuten 5 bzw. Wände 6; 7 ist selbstverständlich auf die grössere Dickenabmessung der Videokassetten Bedacht zu nehmen, wobei sich im Falle einer der Fig. 3 äquivalenten Ausführung (vgl. Fig. 6) insbesondere ein stärkeres Ausmass an Hinterschneidung ergibt, wodurch sich, wenn eine ähnlich dichte Anordnung der Videokassetten 22 erwünscht ist, ein stärkerer höhenmässiger Versatz der Nuten 5 ergibt, d. h. die Nuten 5 steigen gemäss einer steiler verlaufenden gedachten Ebene 11 an. Im übrigen ist aus Fig. 6 ersichtlich, dass auch hier wieder paarweise zusammengehörende Stützbereiche in Form von Auflagebereichen oder -flächen 9 und schräg nach unten weisenden Anschlagflächen der Niederhalteflächen 8 vorgesehen sind. Weiters ist wiederum der Nutboden zweckmässig in Form eines Zylinderflächenabschnittes 20 oder in Form zweier -teilabschnitte 13, 14 ausgebildet, die durch eine im Querschnitt dreieckförmige Abwälzerhebung 16 voneinander getrennt sind, wie in Fig. 6 mit gestrichelten Linien angedeutet ist.

Die Ausführungsform gemäss Fig. 6 eignet sich in gleicher Weise für kompakt ausgebildete, d. h. quaderförmige, Videokassetten 22 wie für die erwähnten buchartigen Kassetten, vgl. auch die strichpunktierte Linie 22A, mit der die Kassettenausbildung mit den nach unten überstehenden flanschartigen Fortsätzen der Vorderwand bzw. Rückwand schematisch angedeutet sind.

Um für derartige Video-Buch-Boxen während der Schwenkbewegung eine zusätzlich verbesserte Führung zu erzielen, kann die Schwenkhalterung gemäss Fig. 6 modifiziert werden, vgl. Fig. 7, wobei eine mittige, höckerartige Leiste 23 vorgesehen ist, die die nutförmige Vertiefung 5 in zwei Teilnuten 27 unterteilt, die sich parallel zueinander erstrecken, und deren Seitenwände 24 überdies hinterschnitten ausgebildet sind, um die Kassette 22 in der jeweiligen Schräglage nur über einen der flanschartig überstehenden Wandvorsprünge, z.B. jenen der Rückwand 25 der Kassette 22, festzuhalten bzw. einzuspannen. Demgemäss sind die jeweiligen Stützbereiche für die Kassette 22 durch die Seitenwand 24 der Leiste 23 und die ihr gegenüberliegende Seitenwand 26 der nutförmigen Vertiefung 5 gebildet. Diese Stützbereiche für die Kassetten 22 entsprechen somit wiederum im Prinzip den oben beschriebenen Auflageflächen 9 und Anschlagflächen 8, und sie sind demgemäss auch in Fig. 7 mit diesen Bezugszeichen bezeichnet. Die Kassetten 22 können in ihrer jeweiligen Schräglage, in der sie wie erwähnt mit bloss einem Wandvorsprung in einer Teilnut 27 fixiert sind, mit dem unteren Randbereich der anderen Wand an der gegenüberliegenden Seitenwand der nutförmigen Vertiefung 5 anliegen, jedoch ist dies nicht unbedingt erforderlich, und ebenso können sie in der End-Schräglage im mittleren Bereich ihrer unteren Schmalseite an der Oberseite der höckerartigen Leisten 23 aufliegen, müssen dies aber nicht.

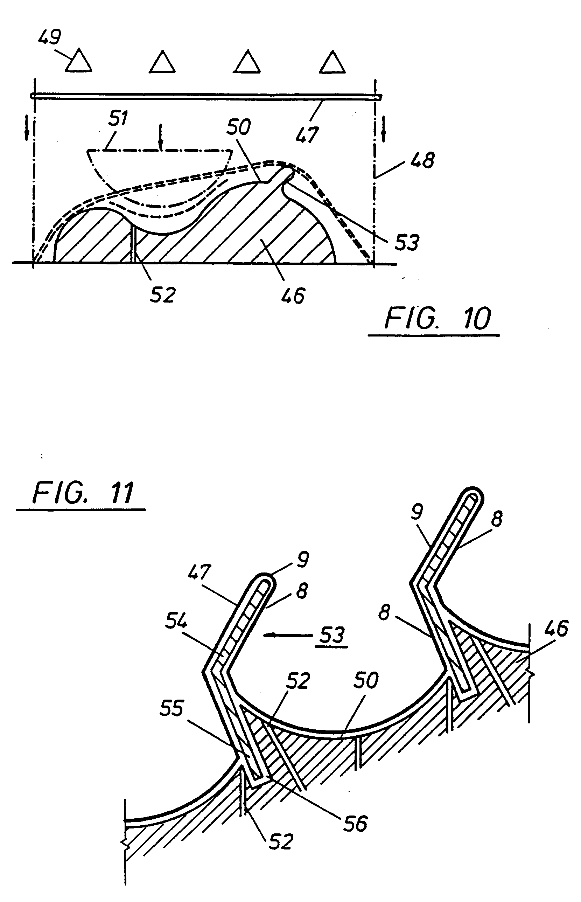

Bei den Ausführungsformen gemäss Fig. 6 und 7 hat sich gezeigt, dass es zweckmässiger ist, den Boden 4 nicht wie in den Ausführungsbeispielen gemäss Fig. 1 bis 5 durch Aluminium-Strangprofilabschnitte zu bilden, sondern anstatt dessen durch profilierte Stahlbleche, um so - im Hinblick auf die schwereren Videokassetten - eine höhere Festigkeit zu erzielen. Eine andere vorteilhafte Herstellungsmöglichkeit ist das Vakuumformen aus Kunststoff, wie weiter unten anhand der Fig. 10 und 11 noch näher erläutert werden wird. Bei der Herstellung aus profilierten Stahlblechen werden auch zweckmässigerweise schmälere Einheiten vorgesehen, etwa für drei bis vier Videokassetten 22 hintereinander, und um eine Art Schrägregal entsprechend der steileren Anordnung der nutförmigen Vertiefungen 5 über eine grössere Höhe zu erhalten, können mehrere derartige Blechabschnitte in ihren Längsrandbereichen miteinander verbunden werden, um so beispielsweise zwanzig oder dreissig Videokassetten in einer Reihe hintereinander unterbringen zu können. Diese Verbindung kann, wie in Fig. 6 und 7 bei 28 angedeutet ist, dadurch bewerkstelligt werden, dass der jeweils obere Längsrand 29 eines unteren Blechabschnittes im Querschnitt hakenförmig umgebogen ist, so dass dieser untere Blechabschnitt oder Bodenteil 4 über den unteren Längsrand des nächstoberen Abschnittes oder Bodenteiles gehängt werden kann. Um eine entsprechende Auflagefläche 9 für die Videokassetten 22 auch in diesem Verbindungsbereich 28 zu erhalten, kann der untere Längsrand jedes Blechabschnittes bzw. Bodens auch entsprechend abgewinkelt bzw. gekröpft sein. wie aus den Fig. 6 und 7 ersichtlich ist.

Die höckerförmigen Leisten 23 können auch durch U-Profilschienen gebildet sein, die an einer Bodenplatte befestigt sind. Die Befestigung der erwähnten U-Profile kann beispielsweise durch Anschrauben oder Annieten, aber auch durch Ankleben erfolgen. Um ferner die Videokassetten 22 auch bei einfach vertikal verlaufenden Seitenwänden einwandfrei und sicher halten zu können, ist es zweckmässig, an diesen vertikalen Schenkeln oder Seitenwänden einen reibungserhöhenden Belag oder Schaumkunststoffbelag anzubringen.

Um bei den genannten buchartigen Videokassetten auch den nach unten überstehenden Rükken trotz der höckerartigen Leisten 23 aufnehmen zu können, müssen diese höckerartigen Leisten dann unterbrochen sein, d. h. diese Leisten erstrecken sich nur über einen Teil der Breite der Einrichtung bzw. über einen Teil der Länge der nutförmigen Vertiefung 5. Im Falle der Anordnung von mehreren Reihen von Videokassetten nebeneinander ähnlich wie bei der Anordnung gemäss Fig. 1 ergibt sich somit, dass die höckerartigen Leisten 23 in Abständen entsprechend den Breiten der Videokassetten (unter Berücksichtigung eines geringfügigen Zwischenraumes) unterbrochen, beispielsweise ausgeschnitten sein müssen. Ein derartiges Ausschneiden wäre beispielsweise bei der Ausführungsform gemäss Fig. 7 denkbar. Die Ausführungsform mit den Profilschienen bietet hier die Möglichkeit, einfach kürzere U-Profilschienen in Abständen voneinander anzubringen, wodurch Zwischenräume erhalten werden, in denen der Buchrücken der Videokassetten 22 aufgenommen werden kann.

Bei einer bereits früher vorgeschlagenen Präsentationsvorrichtung für CD-Kassetten in Form eines Schaugestells liegt eine in Seitenansicht im wesentlichen hohlspiegelartige Anordnung von oberen Aufnahmefachreihen und unteren, stufenartig angeordneten Reihen von horizontalen, kistenartigen Aufnahmeabteilen sowie einer mittleren, an der Gestellrückwand angebrachten Aufnahmeabteilreihe vor. In einem derartigen Schaugestell, das beispielsweise eine Breite von 100 oder 120 cm aufweisen kann und das mit der untersten Aufnahmeabteilreihe in ungefährer Hüfthöhe beginnt, kann eine verhältnismässig grosse Anzahl von CD-Kassetten in übersichtlicher Weise, sowie auch mit einer guten Erreichbarkeit beim "Blättern" bzw. Herausnehmen von CD-Kassetten, erzielt werden. Die erfindungsgemässe, besonders bevorzugte Ausführungsform gemäss den Fig. 1 bis 3 mit der automatisch ansteigenden bzw. abfallenden Anordnung von CD- Kassetten in einer Reihe ergibt hier nun, wie anhand der Fig. 8 schematisch ersichtlich gemacht ist, eine besonders günstige Möglichkeit zu einer weiteren Erhöhung der Anzahl der in einem derartigen Schaugestell 38 unterzubringenden CD-Kassetten. Dabei werden-ebenfalls in ungefährer Hüfthöhe - mehrere, beispielsweise drei, durch die Einrichtungen 1 gemäss Fig. 1 bis 3 gebildete Aufnahmeabteil"reihen" 39 mit nach hinten abfallenden Böden 4 angeordnet, wobei die Böden 4 auch stärker abfallend vorgesehen werden können als in Fig. 2 (wo der Boden von rechts nach links abfällt) gezeigt. Insbesondere ist es hier von Vorteil, bei gleicher Ausbildung der Einrichtungen 1 wie in Fig. 2 gezeigt, d. h. mit einem Winkel von 8° zwischen den Ebenen 11 und 12, die Böden 4 derart anzuordnen, dass die Bodenebene 11, gemäss der die Nuten 5 (Fig. 2) abfallen, stärker zur Horizontalen geneigt ist, etwa unter einem Winkel von 15°, so dass die aufgenommenen CD-Kassetten 2 in ihrer normalen hinteren Schräglage flacher angeordnet sind als in ihrer nach vorne geschwenkten Schräglage, wodurch ein besserer Einblick von oben trotz der relativ tiefen Anordnung erzielt wird. Die Einrichtungen 1 können dabei - anders als bei der bekannten Präsentationsvorrichtung - gemäss Fig. 8 jeweils mit ihrem vorderen Rand in der gleichen Höhe beginnend angeordnet werden, und der Höhenabstand zwischen dem hinteren Rand eines Bodens 4 und dem vorderen Rand des Bodens 4 der nächstfolgenden Einrichtung entspricht im wesentlichen ungefähr der von einer CD-Kassette 2 in der hinteren (flachen) Schräglage benötigten Höhe.

Über der hintersten Einrichtung 1 dieser Anordnung kann, entsprechend der einen mittleren Aufnahmeabteilreihe beim bekannten Schaugestell, eine Aufnahmeabteilreihe 40 in Form einer weiteren Einrichtung 1 mit nach hinten abfallendem Boden vorgesehen werden. Über dieser Einrichtung oder Aufnahmeabteilreihe 40 kann sodann bei der Schaugestellanordnung gemäss Fig. 8, zufolge der beschriebenen Schrägstellung der unteren Einrichtungen 1 und des damit gewonnenen Platzes, jedoch noch eine zusätzliche Aufnahmeabteilreihe 41 durch eine Einrichtung 1 gemäss der Erfindung gebildet werden, wobei diese Einrichtung mit nach hinten ansteigendem Boden angeordnet wird. Darüber sind in herkömmlicher Weise Aufnahmefachreihen 42 für jeweils eine CD-Kassette 2 in einem Aufnahmefach vorhanden.

In Fig. 9 ist ein anderes Schaugestell 43 veranschaulicht, das für die übersichtliche Präsentation von Videokassetten 22, ebenfalls in einer in Seitenansicht im wesentlichen hohlspiegelartigen Anordnung, gedacht ist. Dabei sind ähnlich wie bei der Anordnung gemäss Fig. 8 im oberen Gestellbereich wiederum Aufnahmefachreihen 44 für die Videokassetten in herkömmlicher Weise stufenförmig nach oben vorspringend vorgesehen. Im unteren Gestellbereich sind die Videokassetten in einem Schrägregal 45 angeordnet, das auf die vorstehend in Zusammenhang mit den Fig. 6 und 7 erläuterte Weise z. B. aus durch Übereinanderhängen miteinander verbundenen profilierten Blechabschnitten gebildet ist. Im Hinblick auf die vorstehenden Erläuterungen anhand der Fig. 6 und 7 erübrigt sich hier ein weiteres Eingehen auf die Bildung dieses Schrägregals 45.

Für die Darstellungen in den Fig. 8 und 9 gilt, dass diese nur schematisch die jeweiligen Einrichtungen 1 mit den Böden 4 zeigen, wobei eine detaillierte Veranschaulichung der Profile der Böden im Hinblick auf die vorhergehenden Zeichnungsfiguren entfallen konnte.

Die Einrichtungen 1 bzw. Bodenteile 4 gemäss Fig. 6 oder 7 können anstatt aus profilierten Blechen auch durch Tiefziehen bzw. Vakuumformen einer thermoplastischen Kunststoffolie hergestellt werden, wie nun anhand der Fig. 10 und 11 erläutert werden soll.

In Fig. 10 ist ganz schematisch eine herkömmliche Anordnung zum Tiefziehen von Kunststoffgegenständen unter Vakuumverformen veranschaulicht, wobei eine Form 46 vorgesehen ist, über der eine zu verformende Folie oder Platte 47 aus einem thermoplastischen Kunststoffmaterial angebracht ist. Diese Folie 47 kann beispielsweise mit Hilfe von bloss ganz schematisch angedeuteten Spindeln 48 festgehalten und, nach Erwärmung mit Hilfe von Heizlampen 49, gegen die Form 46 bewegt werden. Dabei wird die Folie 47 unter ungefährer Anpassung an die Form 46 über diese gespannt, ohne dass sie sich den genauen Konturen der Formoberfläche 50 anpasst. Gegebenenfalls kann sodann, wie mit gestrichelter Linie bei 51 angedeutet ist, mit Hilfe eines Stempels od. dgl. die Folie 47 in Vertiefungen der Formoberfläche 50 gedrückt werden. Die endgültige Formgebung erfolgt durch Anlegen eines Vakuums oder Unterdrucks zwischen der Formoberfläche 50 und der über die Form gespannten Folie 47 über an der Formoberfläche 50 mündende Saugkanäle 52, von denen in Fig. 10 beispielshalber einer veranschaulicht ist. Dadurch legt sich die Folie 47 eng an die Form 46 bzw. deren Formoberfläche 50 an und nimmt so deren Gestalt an, wonach sie abgekühlt und erstarren gelassen wird. Danach kann der so geformte Gegenstand von der Form 46 abgenommen werden, und ein nächster Gegenstand kann mit derselben Form hergestellt werden.

Dieses bekannte Vakuumformverfahren eignet sich ausgezeichnet zur Herstellung von dünnwandigen Gegenständen, wie Behältern, Schalen, Tassen u. dgl., in grossen Stückzahlen. Es ergeben sich jedoch Schwierigkeiten, wenn die herzustellenden Gegenstände hinterschnittene Bereiche aufweisen sollen, wie etwa der Boden 4 gemäss Fig. 6. Dann muss auch die Form 46 entsprechend hinterschnitten sein, wie dies in Fig. 10 schematisch bei 53 angedeutet ist. Um dann den Gegenstand dennoch von der Form 46 abnehmen zu können, könnte die Form 46 geteilt werden, und die einzelnen Teile der Form wären gesondert, mit Hilfe von Schiebern od. dgl., zu bewegen, um die Form und den geformten Gegenstand voneinander zu trennen. Diese Technik ist jedoch vielfach aufwendig, umständlich und kostenintensiv.

Wie in Fig. 11 gezeigt ist, werden anstatt dessen an der Form 46 Stützteile 54 angebracht, die entsprechend der Gestalt der gewünschten hinterschnittenen Bereiche, selbstverständlich vermindert um die Materialstärke der Kunststoffolie 47, ausgebildet sind und lösbar angebracht werden. Im einzelnen werden beim dargestellten Ausführungsbeispiel als Stützteile 54 abgewinkelte Stützleisten aus Stahlblech eingesetzt, die mit einem unteren Schaftbereich 55 in Vertiefungen 56 eingesteckt werden, die in der Form 46 vorgesehen sind und sich dabei von der Formoberfläche 50 her in Form von geraden Nuten in die Form 46 hinein erstrecken. Die Form 46 weist ferner die bereits erwähnten Saugkanäle 52 auf, von denen einige ganz nahe den Vertiefungen 56 an der Formoberfläche 50 münden. Wenn nun über die Saugkanäle 52 ein Vakuum angelegt wird, schmiegt sich die Folie 47 nicht nur eng an die Formoberfläche 50 an, sondern auch an die Oberfläche der Stützleisten 54, so dass die in Fig. 11 dargestellte Gestalt erhalten wird, in der die Folie 47 erstarren gelassen wird. Danach wird der so erhaltene Bodenteil zusammen mit den nunmehr grösstenteils im Kunststoffmaterial eingeschlossenen Stützleisten 54 von der Form 46 abgenommen, wobei die Stützleisten 54 nur mit ihrem unteren Schaftbereich 55 vom Kunststoff-Bodenteil, nämlich an dessen Unterseite, abstehen. Dieser Schaftbereich 55 könnte gewünschtenfalls abgeschnitten, abgeschliffen oder auf andere Weise abgetrennt werden. Im Fall der Bodenteile gemäss Fig. 6 (oder 7) stören diese vorspringenden Schaftbereiche 55 in der Regel jedoch nicht, und sie können ohne weiteres belassen werden.

Auf diese Weise können beim Vakuumformen der Bodenteile die hinterschnittenen Bereiche 53 erhalten werden, wobei doch eine einfache Form 46 verwendet werden kann. Als weiterer Vorteil ergibt sich bei der beschriebenen Herstellungsweise, dass die Stützleisten 54, die am vakuumgeformten Bodenteil verbleiben, zugleich eine Versteifung oder Armierung für den hergestellten Bodenteil bilden, so dass dessen Festigkeit und Steifigkeit wesentlich erhöht werden können. Dies ist bei den erwähnten Bodenteilen gemäss Fig. 6 oder 7 von grosser Bedeutung, da es damit möglich wird, tassenförmige Bodenteile mit einer Länge von beispielsweise 1 m und einer Breite von ½ m herzustellen und diese tassenförmigen Bodenteile mit Kassetten 22, etwa Videokassetten, zu füllen, wobei auch bei Abstützung des Bodenteils bloss an seinen Rändern eine ausreichende Festigkeit gegeben ist, um das Gewicht der Kassetten 22 zu tragen. Dabei wirkt es sich auch günstig aus, dass die Stützleisten 54 abgewinkelt sind.

Um die Bindung zwischen den Stützleisten 54 und der verformten Kunststoffolie 47 zu verstärken, können die Stützleisten 54 mit einem Haftmittel oder Bindemittel versehen werden, bevor die Kunststoffolie 47 gegen sie angesaugt wird. Insbesondere ist es zweckmässig, einen ausreichend hitzebeständigen Klebstoff auf den Stützleisten 54 aufzubringen. Sofern die Stützleisten 54 ebenfalls aus Kunststoffmaterial hergestellt sind, besteht eine vorteilhafte Möglichkeit auch darin, nach dem Vakuumverformen die verformte Kunststofffolie mit den Stützleisten 54 zumindest bereichsweise durch Ultraschweissen oder örtliches Erhitzen fest zu verbinden.

Wenn die Erfindung vorstehend anhand von bevorzugten Ausführungsbeispielen näher erläutert wurde, so sind doch selbstverständlich weitere Abwandlungen und Modifikationen möglich, ohne dass der Rahmen der Erfindung verlassen wird. So ist es beispielsweise grundsätzlich auch denkbar, bei den beschriebenen Einrichtungen den Boden 4 als Kunststoff- Formteil durch Blasen herzustellen. Bei kleineren Einheiten, insbesondere für Heimanwendungen, können für die Bodenteile 4 selbstverständlich auch Abschnitte eines Kunststoff-Strangprofiles herangezogen werden. Wenn ferner in Zusammenhang mit vertikalen Seitenwänden ein reibungserhöhender Belag bzw. Schaumkunststoffbelag erwähnt wurde, so kann selbstverständlich ein solcher Belag, etwa in Form eines aufgeklebten Stoffüberzuges, auch bei den anderen Ausführungsformen mit Vorteil vorgesehen werden. Insbesondere ergibt dann ein derartiger Überzug, auch wenn eine Erhöhung der Reibung für die sichere Fixierung der Gegenstände in den jeweiligen Schräglagen nicht erforderlich wäre, den Vorteil einer besonders schonenden Behandlung der Gegenstände, insbesondere beim "Blättern", da die Gegenstände dann mit ihren Unterseiten auf einer weichen, nachgiebigen Unterlage gleiten. Ausser einem aufgeklebten Stoffüberzug sind auch andere Überzugs- oder Beschichtungstechniken denkbar, wie etwa Aufsprühen eines Kunststoff-Überzuges u. dgl.

Um ferner die Reihen von hintereinander angeordneten Gegenständen, insbesondere Kassetten, voneinander getrennt zu halten, können nicht nur die stab- oder schienenförmigen Teiler gemäss Fig. 1, 2 und 4 vorgesehen werden, es können vielmehr anstatt dessen auch plattenförmige Trenn- oder Teilerelemente zwischen den Reihen angeordnet werden, und überdies kann die Unterteilung auch durch in den nutförmigen Vertiefungen 5 vorgesehene, z. B. buckelförmige oder noppenartige Vorsprünge, realisiert werden, wie in Fig. 5 mit strichpunktierter Linie bei 57 angedeutet ist. Diese Vorsprünge 57 wirken als seitliche Anschläge für die Gegenstände 2 (Fig. 1 bis 5) bzw. 22 (Fig. 6, 7) und verhindern dadurch eine unerwünschte seitliche Verschiebung derselben. In dieser Wirkung sind die Anschlagvorsprünge 57 auch mit den mit Unterbrechungen vorgesehenen, durch U-Profilschienen gebildeten Leisten 23 vergleichbar, wo die U-Profilschienen mit ihren Stirnseiten ein seitliches Verschieben der Kassetten 22 verhindern, da sie eine Anschlagfläche für den nach unten vorstehenden Rücken der Kassetten 22 bilden, der im erwähnten Zwischenraum aufgenommen ist. Im Fall eines Schrägregals für Videokassetten, wie in den Fig. 6, 7 bzw. 11 angedeutet, kann vorteilhafterweise ebenfalls ein stab- oder schienenförmiger Teiler ähnlich dem Teiler 3 gemäss Fig. 1 und 2 vorgesehen werden, jedoch ist es hier zweckmässig, anstatt der Schnappbefestigung des Teilers 3 eine feste Verbindung mit den Wänden oder Stegen 7 (bzw. zumindest einzelnen derselben) durch Verschweissen, Anlöten oder Verkleben vorzusehen.

Was die Profilgebung der Nuten bzw. nutförmigen Vertiefungen 5 betrifft, so ist es hier in Abwandlung der Ausführungsformen gemäss Fig. 1 bis 7 prinzipiell auch möglich, gerade (vertikale) Nut-Seitenwände vorzusehen, wobei vor allem bei derartigen geraden Seitenwänden eine reibungserhöhende Oberfläche (Überzug oder Oberflächenbehandlung) zweckmässig ist. Andererseits kann der Nutboden auch derart ausgebildet sein, vgl. die in Fig. 6 bei 58 strichpunktiert angedeutete Ausführung. dass eine mittlere Abstütz- und Abwälzerhebung ähnlich der Erhebung 16 vorhanden ist, zu deren beiden Seiten jedoch der Nutboden derart vertieft ist, dass dort die Kassetten nicht mit ihrer Unterseite aufliegen (sondern bloss auf der mittleren, sie führenden Abstütz- und Abwälzerhebung).

Hinsichtlich der anhand der Fig. 11 beschriebenen Herstellungsweise ist schliesslich zu erwähnen, dass es auch möglich ist, als Stützleisten gitterförmige Strukturen einzusetzen, sofern diese Strukturen nur eine ausreichende Steifigkeit besitzen, damit sich die Kunststoffolie 46 beim Vakuumverformen an sie anlegen kann. Die Abstände zwischen den Saugkanälen 52 der Form 46 sind selbstverständlich je nach den Gegebenheiten, nach der Plastizität und Dicke der Kunststoffolie usw. zu wählen, wie dies an sich bekannt ist - wesentlich ist nur, dass zumindest einige der Saugkanäle nahe den Stützleisten an der Formoberfläche münden, so dass im Bereich dieser Stützleisten ebenfalls ein Unterdruck herbeigeführt wird, um die Kunststoffolie gegen die Stützleisten zu saugen. Die beschriebene Technik kann ferner bei der Herstellung von Bodenteilen aus den verschiedensten Thermoplasten eingesetzt werden, wie z.B. Polypropylen, Polymethacrylat, ABS (Acrylbutadienstyrol), PVC hart (Polyvinylchlorid), Polyäthylen oder Polycarbonat.

## Patentansprüche

1. Einrichtung (1) zur Aufnahme bzw. Zurschaustellung von steifen, flachen Gegenständen (2; 22), nämlich von CD-, Audio- oder Video-Kassetten bzw. deren Behältern, in einer im wesentlichen aufrechten Lage, mit einem Boden (4), in dessen Bereich Auflager zur Abstützung der Gegenstände in hintereinandergereihter Anordnung sowie schlitzartige Führungen zur Schwenklagerung der zwischen einer nach hinten geneigten Schräglage und einer nach vorne geneigten Schräglage verschwenkbaren Gegenstände (2; 22) vorgesehen sind, wobei die Führungen zu diesem Zweck mit paarweise zusammengehörigen Stützbereichen (8, 9) an Stützwänden (6; 24, 26) ausgestattet sind und die paarweise zusammenwirkenden Stützbereiche (8, 9) in ihrer gegenseitigen Lage und in ihrer Höhe so angeordnet sind, daß die Gegenstände (2; 22) in beiden Schräglagen nur an Stellen tiefer als ihre horizontale Mittenlinie festgehalten werden, dadurch gekennzeichnet, daß der Boden (4) querverlaufende nutförmige Vertiefungen (5) aufweist, die die Schwenklagerungen für die Gegenstände (2; 22) und die Führungsfläche für die beiden Kanten (17, 18) des unteren Randes der Gegenstände (2; 22) während der gesamten Schwenkbewegung bilden und die Gegenstände (2; 22) nur an ihrem unteren Rand festhalten.

2. Einrichtung nach Anspruch 1, dadurch gekennzeichnet, dass die querverlaufenden nutförmigen Vertiefungen (5) des Bodens (4) mit jeweils verschiedenen der paarweise zusammenwirkenden Stützbereiche (8, 9) die Gegenstände (2; 22) in den zwei verschiedenen Schräglagen abstützen und festhalten.

3. Einrichtung nach Anspruch 1 oder 2, dadurch gekennzeichnet, dass der Boden (4) als querverlaufende nutförmige Vertiefungen (5) längs ihrer beiden Ränder hinterschnittene Nuten aufweist.

4. Einrichtung nach Anspruch 1, 2 oder 3, dadurch gekennzeichnet, dass die nutförmigen Vertiefungen (5) zumindest abschnittsweise im Querschnitt kreisbogenförmig sind.

5. Einrichtung nach Anspruch 4, dadurch gekennzeichnet, dass die nutförmigen Vertiefungen (5) zwei im Querschnitt kreisbogenförmige Abschnitte (13, 14) aufweisen, die voneinander durch eine mittige, im Querschnitt ungefähr dreieckförmige Abwälzerhebung (16) getrennt sind.

6. Einrichtung nach Anspruch 5, dadurch gekennzeichnet, dass die beiden, im Querschnitt kreisbogenförmigen Abschnitte (13, 14) Teile von ein und derselben gedachten Zylinderfläche sind und somit eine gemeinsame Achse (15) aufweisen.

7. Einrichtung nach einem der Ansprüche 3 bis 6, dadurch gekennzeichnet, dass die Stützbereiche für die Gegenstände (2; 22) im Bereich der Nutränder paarweise zueinander parallel verlaufende Auflageflächen (9) und Anschlagflächen (8) besitzen, wobei die Auflageflächen (9) schräg nach oben und die Anchlagflächen (8) schräg nach unten gewandt sind.

8. Einrichtung nach Anspruch 7, dadurch gekennzeichnet, dass die Auflageflächen (9) und Anschlagflächen (8) einen Winkel von ungefähr 30° mit der Mitten- oder Symmetrieebene (10) der jeweiligen Nut (5) einschliessen.

9. Einrichtung nach einem der Ansprüche 3 bis 8, dadurch gekennzeichnet, daß die aufeinanderfolgenden Hinterschneidungen benachbarter Nuten für eine stufenförmig ansteigende bzw. abfallende Anordnung der Nuten (5) gegenseitig in der Höhe versetzt sind.

10. Einrichtung nach Anspruch 9, dadurch gekennzeichnet, daß die Mitten- oder Symmetrieebene (10) jeder Nut (5) um ungefähr 8° zur Senkrechten auf die Bodenebene (11) der Einrichtung geneigt verläuft.

11. Einrichtung nach einem der Ansprüche 3 bis 9, dadurch gekennzeichnet, daß die Mitten- oder Symmetrieebene (10) jeder Nut senkrecht zu der Bodenebene (11) der Einrichtung verläuft.

12. Einrichtung nach Anspruch 11, dadurch gekennzeichnet, dass die Nuten (5) jeweils durch sich von unten nach oben zunächst gemäss Zylinderflächenabschnitten verjüngende und daran anschliessend wulstartig verdickte, symmetrisch ausgebildete Stege (7) voneinander getrennt sind.

13. Einrichtung nach Anspruch 1 oder 2, für buchartige Videokassetten (22) mit flanschartig überstehenden Vorder- und Rückwänden, dadurch gekennzeichnet, dass die Vertiefungen (5) je durch mittig angeordnete höckerartige Leisten (23) unter Bildung von zwei zueinander parallel verlaufenden Teilnuten (27), je eine zur Aufnahme einer der überstehenden Kassetten-Wände (z. B. 25), unterteilt sind.

14. Einrichtung nach Anspruch 13, dadurch gekennzeichnet, dass jeweils eine Seitenwand (24) der Leiste (23) und die ihr gegenüberliegende Seitenwand (26) der Vertiefung (5) die Stützbereiche (8, 9) für die Videokassette (22) in einer ihrer beiden Schräglagen definieren.

15. Einrichtung nach Anspruch 14, dadurch gekennzeichnet, dass zumindest die Seitenwände (24) der Leiste (23) mit Hinterschneidungen ausgebildet sind.

16. Einrichtung nach einem der Ansprüche 13 bis 15, dadurch gekennzeichnet, dass die Oberseite der höckerartigen Leisten (23) zur Bildung einer Führungs-Gleitfläche für die Unterseite der jeweiligen Videokassetten (22) zwischen den überstehenden Vorder- und Rückwänden zylinderflächenförmig gewölbt ist.

17. Einrichtung nach einem der Ansprüche 13 bis 16, dadurch gekennzeichnet, dass die die Vertiefungen (5) begrenzenden Seitenwände vertikal verlaufen.

18. Einrichtung nach einem der Ansprüche 13 bis 17, dadurch gekennzeichnet, dass zumindest die Seitenwände der Leiste (23) mit einem reibungserhöhenden Belag z. B. einem Schaumkunststoff- Belag, versehen sind.

19. Einrichtung nach Anspruch 12, 13 oder 18, dadurch gekennzeichnet, dass die höckerartigen Leisten (23) durch an einer Bodenplatte befestigte U-Profile gebildet sind.

20. Einrichtung nach einem der Ansprüche 13 bis 19, für buchartige Videokassetten mit einem ebenfalls überstehenden, die Vorder- und die Rückwand verbindenden Rücken, dadurch gekennzeichnet, dass sich die höckerartigen Leisten (23) nur über einen Teil der Länge der Vertiefungen (5) erstrecken.

21. Einrichtung nach Anspruch 20, für die Anordnung von jeweils mehreren Videokassetten nebeneinander in einer durchgehenden Vertiefung, dadurch gekennzeichnet, dass die höckerartigen Leisten (23) in Abständen ungefähr entsprechend der Breite der Videokassetten (22) unterbrochen sind, beispielsweise ausgeschnitten sind, um die nach unten überstehenden Abschnitte der Rücken der Videokassetten aufzunehmen.

22. Einrichtung nach einem der Ansprüche 1 bis 18 oder 21, dadurch gekennzeichnet, dass der Boden (4) durch einen Strangprofilabschnitt, z.B. aus Aluminium, gebildet ist.

23. Einrichtung nach einem der Ansprüche 1 bis 18 oder 21, dadurch gekennzeichnet, dass der Boden (4) durch einen oder mehrere profilierte Blechabschnitte, z. B. aus Stahl, gebildet ist.

24. Einrichtung nach einem der Ansprüche 1 bis 23, dadurch gekennzeichnet, dass die Länge der Vertiefungen (5) für jeweils mehrere Gegenstände (2; 22) nebeneinander bemessen ist und wenigstens ein stab- oder schienenförmig ausgebildeter Teiler (3) zur Trennung der so erhaltenen, nebeneinander vorgesehenen Reihen von hintereinander angeordneten Gegenständen an zumindest einigen der die nutförmigen Vertiefungen (5) begrenzenden Wände (7) befestigt ist.

25. Einrichtung nach Anspruch 24, dadurch gekennzeichnet, dass in an sich bekannter Weise der z. B. aus Kunststoff bestehende Teiler (3) mit von ihm abstehenden, paarweise angeordneten, elastisch auslenkbaren Schnappvorsprüngen (19) zum Festklemmen auf den Wänden versehen ist.

26. Einrichtung nach Anspruch 24, dadurch gekennzeichnet, dass der Teiler (3) durch Anschweissen, Anlöten oder Ankleben fest mit den Wänden verbunden ist.

27. Einrichtung nach einem der Ansprüche 1 bis 23, dadurch gekennzeichnet, dass zur Trennung von nebeneinander in den nutförmigen Vertiefungen (5) vorgesehenen Gegenständen innerhalb der nutförmigen Vertiefungen (5) z. B. noppenartige Anschlagvorsprünge (57) für die Gegenstände (2; 22) vorgesehen sind.

28. Anordnung mit mehreren Einrichtungen nach einem der Ansprüche 9, 10 oder 24 bis 27 in einem Schaugestell (38), dadurch gekennzeichnet, dass die Einrichtungen (1) im unteren Bereich des in Seitenansicht in an sich bekannter Weise ungefähr hohlspiegelartig ausgebildeten Schaugestells (38) jeweils mit schräggestelltem Boden (4), mit nach hinten abfallender Anordnung der Nuten und jeweils in gleicher Höhe beginnenden Böden, hintereinander vorgesehen sind, wobei die Gegenstände (2) in der vorderen Schräglage einen kleineren Winkel mit der Vertikalen als in der hinteren Schräglage einschliessen und der Höhenunterschied zwischen dem hinteren Ende des Bodens (4) einer Einrichtung und dem vorderen Ende des Bodens der nächstfolgenden Einrichtung ungefähr gleich der Höhe eines Gegenstandes (2) in der nach hinten geneigten Schräglage ist.

29. Anordnung nach Anspruch 28, dadurch gekennzeichnet, dass über der hintersten Einrichtung zwei weitere Einrichtungen (40, 41) vorgesehen sind, von denen die untere (40) ebenfalls mit nach hinten abfallendem Boden und die obere (41) mit nach hinten ansteigendem Boden angeordnet ist.

30. Verfahren zur Herstellung von Einrichtungen gemäss Anspruch 3, dadurch gekennzeichnet, dass eine Folie (47) aus thermoplastischem Kunststoffmaterial erwärmt und mit Hilfe von Unterdruck an eine mit Saugkanälen (52) versehene Form (46) angedrückt wird, an der zuvor entsprechend den hinterschnittenen Nuträndern geformte, z. B. abgewinkelte Stützleisten (54), z. B. aus Stahlblech oder Kunststoff, lösbar angebracht wurden, wobei die Folie (47) beim Ansaugen an die Form (46) um diese Stützleisten (54) herum verformt wird, und dass danach die verformte Folie (47) abgekühlt und zusammen mit den Stützleisten (54) von der Form (46) abgenommen wird.

31. Verfahren nach Anspruch 30, dadurch gekennzeichnet, dass die Stützleisten (54) jeweils mit einem Schaftbereich (55) in eine Vertiefung (56) in der Form (46) eingesetzt werden.

32. Verfahren nach Anspruch 31, dadurch gekennzeichnet, dass nach Abnahme der vakuumgeformten Folie (47) von der Form die abstehenden Schaftbereiche (55) der Stützleisten (54) abgetrennt werden.

33. Verfahren nach einem der Ansprüche 30 bis 32, dadurch gekennzeichnet, dass auf die Stützleisten (54) vor dem Ansaugen der Folie (47) ein Haft- oder Bindemittel, z. B. ein Klebstoff, aufgebracht wird, um die Bindung zwischen den Stützleisten und dem Kunststoffmaterial der angesaugten Folie zu verstärken.

34. Verfahren nach einem der Ansprüche 30 bis 33, dadurch gekennzeichnet, dass die Bindung zwischen den aus Kunststoff hergestellten Stützleisten (54) und dem Kunststoffmaterial der vakuumverformten Folie (47) durch Verschweissen verstärkt wird.

35. Verfahren nach Anspruch 34, dadurch gekennzeichnet, dass die Bindung durch Ultraschallschweissen verstärkt wird.

36. Verfahren nach Anspruch 31, dadurch gekennzeichnet, dass in der Form (46) zumindest einige der Saugkanäle (52) benachbart den Vertiefungen (56) für die Schaftbereiche (55) der Stützleisten (54) an der Formoberfläche (50) münden.

## Claims

1. A device (1) for receiving and displaying rigid, flat articles (2; 22), such as, for example, CD, audio or video cassettes and their cases, in a substantially upright position, comprising a base (4), in the region of which bearings for supporting the articles in an array one behind another and slit-shaped guides for the pivotal support of the articles (2; 22) between a rearwardly inclined oblique position and a forwardly inclined oblique position are provided, the guides being equipped for this purpose with support areas (8, 9), cooperating in pairs, on support walls (6; 24, 26) and the support areas (8, 9), cooperating in pairs, being so arranged in their mutual position and in their height that the articles (2;22) are held in both the oblique positions only at locations lower than their horizontal centre-line, characterized in that the base (4) comprises transverse, groove-shaped recesses (5), which form the pivotal supports for the articles (2; 22) and the guiding surface for the two edges (17, 18) of the lower rims of the articles (2; 22) during the entire pivotal movement, holding the articles (2; 22) only at their lower edges.

2. A device according to claim 1, characterized in that the transverse groove-shaped recesses (5) of the base (4) support and retain the articles (2; 22) in the two different oblique positions by respective different support areas (8, 9) cooperating in pairs.

3. A device according to claim 1 or 2, characterized in that the base (4) possesses undercut grooves along its two edges as transverse groove-shaped recesses (5).

4. A device acording to claim 1, 2 or 3, characterized in that the groove-shaped recesses (5) are circularly arc-shaped in cross section at least sectionally.

5. A device according to claim 4, characterized in that the groove-shaped recesses (5) possess two sections (13, 14) of circularly arc-shaped cross section, which are separated from each other by a central rounded-off projection (16) approximately triangular in cross section.

6. A device according to claim 5, characterized in that the two circularly arc-shaped sections (13, 14) are parts of one and the same imaginary cylindrical surface, thus having a common axis (15).

7. A device according to one of claims 5 to 6, characterized in that the support regions for the articles (2; 22), in the region of the groove edges, possess contact areas (9) and abutment areas (8) extending parallel to each other in pairs, the contact areas (9) being inclined upwardly and the abutment areas (8) being inclined downwardly.

8. A device according to claim 7, characterized in that the contact areas (9) and the abutment areas (8) enclose an angle of approximately 30° with the median plane or plane of symmetry (10) of the relevant groove (5).

9. A device according to one of claims 3 to 8, characterized in that the consecutive undercuts of adjacent grooves are mutually offset in height for a step-wisely rising or falling arrangement of the grooves (5).

10. A device according to claim 9, characterized in that the median plane or plane of symmetry (10) of each groove (5) extends in a manner inclined at approximately 8° relative to the perpendicular to the base plane (11).

11. A device according to one of claims 3 to 9, characterized in that the median plane or plane of symmetry (10) of each groove extends perpendicular to the base plane (11) of the device.

12. A device according to claim 11, characterized in that the grooves (5) are separated from one another by symmetrical cross pieces (7) initially tapering from bottom to top according to cylindrical area sectors and thereafter thickened to a beading form.

13. A device according to claim 1 or 2, for booklike video cassettes (22) with flange-like overhanging front and rear walls, characterized in that each of the recesses (5) is divided by medially disposed, hump-shaped fillets (23), forming two mutually parallel partial grooves (27), each for receiving one of the overhanging cassette walls (e.g. 25).

14. A device according to claim 13, characterized in that each lateral wall (24) of the fillet (23) and the lateral wall (26) opposite thereto of the recess (5) define the support areas (8, 9) for the video cassettes (22) in one of their two oblique positions.

15. A device according to claim 14, characterized in that at least the lateral walls (24) of the fillet (23) are constructed with untercuts.

16. A device according to one of claims 13 to 15, characterized in that the upper face of the hump-shaped fillet (23) is arched to a cylindrical shape to form a slide-guide surface for the lower face of the video cassettes (22) between the overhanging front and rear walls.

17. A device according to one of claims 13 to 16, characterized in that the lateral walls limiting the recesses (5) extend vertically.

18. A device according to one of claims 13 to 17, characterized in that at least the lateral walls of the fillet (23) are provided with a friction-increasing coating, for example a foam plastics coating.

19. A device according to claim 12, 13 or 18, characterized in that the hump-shaped fillets (23) are formed of U-section members fixed to a base plate.

20. A device according to one of claims 13 to 19, for book-like video cassettes with a likewise overhanging spine connecting the front and the rear walls, characterized in that the hump-shaped fillets (23) extend over only a part of the length of the recesses (5).

21. A device according to claim 20, for the arrangement of a plurality of video cassettes next to one another in a through recess, characterized in that the hump-shaped fillets (23) are interrupted at intervals approximately corresponding to the width of the video cassettes (22), for example are undercut, in order to receive the downwardly extending portions of the spines of the video cassettes.

22. A device according to one of claims 1 to 18 or 21, characterized in that the base (4) is formed of an extruded profile, e.g. of aluminium.

23. A device according to one of claims 1 to 18 or 21, characterized in that the base (4) is formed of one or more sheet metal profiles, e.g. of steel.

24. A device according to one of claims 1 to 23, characterized in that the length of the recesses (5) is designed for a plurality of articles (2; 22) adjacent to one another and at least one bar-shaped or rail-shaped divider (3) for separating the thus obtained, adjacent rows of articles disposed one behind another is fixed to at least some of the walls (7) limiting the groove-shaped recesses (5).

25. A device according to claim 24, characterized in that the divider (3), for example of plastics material, is provided in a known manner with elastically deflectable snap projections (19), projecting from it in pairs, for clamping on the walls.

26. A device according to claim 24, characterized in that the divider (3) is firmly attached to the walls by welding, soldering or glueing.

27. A device according to one of claims 1 to 23, characterized in that, for separating articles provided adjacent to one another in the groove-shaped recesses (5), stop projections (57), e.g. of knob shape, are provided for the articles (2; 22) inside the groove-shaped recesses (5).

28. An arrangement comprising a plurality of devices, according to one of claims 9, 10 or 24 to 27, in a display case (38), characterized in that the devices (1) are provided one behind another in the lower region of the display case (38) shaped in a known manner in side view substantially as a concave mirror, each device having its base (4) inclined with a rearwardly descending arrangement of the grooves and each of the bases commencing at the same height, the articles (2) in their forward inclined position being at a smaller angle to the vertical than in their rear inclined position and the difference in height between the rear end of the base (4) of one device and the front end of the base of the device next behind being approximately equal to the height of an article (2) in the rearwardly inclined position.

29. An arrangement according to claim 28, characterized in that above the rearmost device there are provided two further devices (40, 41), of which the lower (40) is also disposed with its base descending towards the rear and the upper one (41) with its base ascending towards the rear.

30. A method of making devices according to claim 3, characterized in that a sheet (47) of thermoplastics material is heated and is pressed by means of vacuum onto a mould (46) provided with suction ducts (52), on which mould support fillets (54), for exemple of steel sheet or plastics, which are shaped, for example cranked, to correspond to the undercut groove edges, have previously been releasably mounted, the sheet (47) being shaped around these support fillets (54) during its suction onto the mould (46), and that thereafter the shaped sheet (47) is cooled and, together with the support fillets (54), is removed from the mould (46).

31. A method according to claim 30, characterized in that the support fillets (54) are each inserted with a shaft region (55) into a recess (56) in the mould (46).

32. A method according to claim 31, characterized in that after the vacuum-moulded sheet (47) has been removed from the mould, the projecting shaft regions (55) of the support fillets (54) are cut off.

33. A method according to one of claims 30 to 32, characterized in that a bonding or binding agent, e.g. an adhesive, is applied onto the support fillets (54) before the sucking-on of the sheet (47), in order to reinforce the bond between the support fillets and the plastics material of the sucked-on sheet.

34. A method according to one of claims 30 to 33, characterized in that the bond between the support fillets (54) made of plastics material and the plastics material of the vacuum-moulded sheet (47) is reinforced by welding.

35. A method according to claim 34, characterized in that the bond is reinforced by ultrasonic welding.

36. A method according to claim 31, characterized in that at least some of the suction ducts (52) in the mould (46) open onto the mould surface (50) adjacent the recesses (56) for the shaft regions (55) of the support fillets (54).

## Revendications

1. Dispositif (1) de rangement ou de présentation d'objets (2; 22) rigides plats, tels que cassettes pour disques compacts, cassettes audio ou vidéo et leurs récipients, dans une position à peu près verticale, comportant un fond (4) dans la zone duquel sont prévus des appuis destinés à soutenir les objets disposés les uns derrière les autres, ainsi que des organes de guidage en forme de fente destinés à supporter de facon pivotante les objets (2; 22) pivotant d'une position oblique inclinée vers l'arrière à une position oblique inclinée vers l'avant, les organes de guidage étant équipés à cet effet de zones d'appui (8, 9) associées deux par deux, contre des cloisons d'appui (6; 24, 26), et les zones d'appui (8, 9) coopérant deux par deux étant disposées dans leur position réciproque et leur hauteur de telle sorte que les objets (2; 22) ne soient fixés dans les deux positions obliques qu'en des points situés plus bas que leur ligne médiane horizontale, caractérisé en ce que le fond (4) présente des enfoncements (5) transversaux en forme de rainures, qui forment les supports de pivotement des objets (2; 22) et les surfaces de guidage pour les deux arêtes (17, 18) du bord inférieur des objets (2; 22) pendant tout le mouvement de pivotement en ne retenant les objets (2; 22) que sur leur bord inférieur.

2. Dispositif selon la revendication 1, caractérisé en ce que les enfoncements (5) transversaux en forme de rainures du fond (4) soutiennent et retiennent les objets (2; 22) dans les deux positions obliques différentes avec, dans chaque cas, des zones d'appui (8, 9) différentes parmi les zones d'appui coopérant deux par deux.

3. Dispositif selon la revendication 1 ou 2, caractérisé en ce que le fond (4) présent, comme enfoncements (5) transversaux en forme de rainures, des rainures détalonnées le long de leurs deux bords.

4. Dispositif selon la revendication 1, 2 ou 3, caractérisé en ce que les enfoncements (5) en forme de rainures sont de section transversale en arc de cercle, au moins en sections.

5. Dispositif selon la revendication 4, caractérisé en ce que les enfoncements (5) en forme de rainures présentent deux sections (13, 14) de section transversale en arc de cercle, qui sont séparées l'une de l'autre par une bosse de roulement (16) centrale de section transversale à peu près triangulaire.

6. Dispositif selon la revendication 5, caractérisé en ce que les deux sections (13, 14) de section transversale en arc de cercle font partie d'une seule et même surface cylindrique imaginaire et présentent ainsi un axe (15) commun.

7. Dispositif selon l'une des revendications 3 à 6, caractérisé en ce que les zones d'appui des objets (2; 22) présentent, dans la zone des bords des rainures, des surfaces d'appui (9) et des surfaces de butée (8) parallèles deux à deux, les surfaces d'appui (9) étant dirigées obliquement vers le haut et les surfaces de butée (8) obliquement vers le bas.

8. Dispositif selon la revendication 7, caractérisé en ce que les surfaces d'appui (9) et les surfaces de butée (8) forment un angle d'environ 30° avec le plan médian ou de symétrie (10) de la rainure (5) correspondante.

9. Dispositif selon l'une des revendications 3 à 8, caractérisé en ce que les détalonnages successifs de rainures voisines sont décalés en hauteur les uns par rapport aux autres pour une disposition montante ou descendante en escalier des rainures (5).

10. Dispositif selon la revendication 9, caractérisé en ce que le plan médian ou de symétrie (10) de chaque rainure (5) s'étend de manière inclinée d'environ 8° par rapport à la perpendiculaire au plan de fond.

11. Dispositif selon l'une des revendications 3 à 9, caractérisé en ce que le plan médian ou de symétrie (10) de chaque rainure s'étend perpendiculairement au plan de fond (11).

12. Dispositif selon la revendication 11, caractérisé en ce que les rainures (5) son séparées les une des autres par des cloisons (7) symétriques se rétrécissant tout d'abord du bas vers le haut selon des sections de surface cylindrique, puis s'épaississant à la manière d'un bourrelet.

13. Dispositif selon la revendication 1 ou 2, destiné à des cassettes vidéo en forme de livre comportant des parois avant et arrière saillantes à la manière de brides, caractérisé en ce que les enfoncements (5) sont subdivisés chacun par des listels (23) bosselés disposés au milieu pour former deux parties de rainure (27) parallèles entre elles, chacune d'elles étant destinée à reçevoir l'une des parois de cassette saillantes (par exemple 25).

14. Dispositif selon la revendication 13, caractérisé en ce qu'une paroi latérale (24) du listel (23) et la paroi latérale (26) opposée de l'enfoncement (5) définissent les zones d'appui (8, 9) de la cassette vidéo (22) dans l'une de ses deux positions obliques.

15. Dispositif selon la revendication 14, caractérisé en ce qu'au moins les parois latérales (24) du listel (23) présentent des détalonnages.

16. Dispositif selon l'une des revendications 13 à 15, caractérisé en ce que la face supérieure des listels (23) bosselés est bombée en forme de surface cylindrique, pour former une surface de glissement et de guidage destinée à la face inférieure de la cassette vidéo (22) concernée, entre les parois avant et arrière saillantes.

17. Dispositif selon l'une des revendications 13 à 16, caractérisé en ce que les parois latérales délimitant les enfoncements (5) sont verticales.

18. Dispositif selon l'une des revendications 13 à 17, caractérisé en ce que les parois latérales du listel (23) au moins sont pourvues d'un revêtement augmentant le frottement, par exemple un revêtement en mousse synthétique.

19. Dispositif selon l'une des revendications 12, 13 ou 18, caractérisé en ce que les listels (23) bosselés sont formés par des profilés en U fixés sur une plaque de fond.

20. Dispositif selon l'une des revendications 13 à 19, destiné à des cassettes vidéo en forme des livres comportant un dos également saillant, reliant la paroi avant et la paroi arrière, caractérisé en ce que les listels (23) bosselés s'étendent sur une partie de la longueur des enfoncements (5).

21. Dispositif selon la revendication 20 pour le rangement de plusieurs cassettes vidéo côté à côté dans un enfoncement continu, caractérisé en ce que les listels (23) bosselés sont interrompus, par exemple entaillés, à des intervalles correspondant à peu près à la largeur des cassettes vidéo (22), pour recevoir les sections faisant saillie vers le bas des dos des cassettes vidéo.

22. Dispositif selon l'une des revendications 1 à 18 ou 21, caractérisé en ce que le fond (4) est formé par une section de profilés filés, par exemple en aluminium.

23. Dispositif selon l'une des revendications 1 à 18 ou 21, caractérisé en ce que le fond (4) est formé par une ou plusieurs sections de tôle profilée, par exemple en acier.

24. Dispositif selon l'une des revendications 1 à 23, caractérisé en ce que la longueur des enfoncements (5) est calculée pour plusieurs objets (2; 22) disposés côté à côté, en ce qu'au moins un diviseur (3) en forme de barre ou de rail destiné à séparer les rangées ainsi obtenues prévues côté à côté, d'objets disposés les uns derrière les autres est fixé sur au moins certaines des parois (7) délimitant les enfoncements (5) en forme de rainures.

25. Dispositif selon la revendication 24, caractérisé en ce que le diviseur (3), réalisé par exemple en matière plastique, est pourvu de manière connue de saillies d'encliquetage (19) cédant élastiquement, faisant sallie du diviseur, disposées deux par deux, pour serrage sur les parois.

26. Dispositif selon la revendication 24, caractérisé en ce que le diviseur (3) est assemblé de manière fixe aux parois par soudage, brasage ou collage.

27. Dispositif selon l'une des revendications 1 à 23, caractérisé en ce que, pour séparer des objets prévus côté à côté dans les enfoncements (5) en forme de rainures, il est prévu par exemple des saillies de butée (57) en forme de boutons destinées aux objets (2; 22) à l'intérieur des enfoncements (5) en forme de rainures.

28. Dispositif selon l'une des revendications 9, 10 ou 24 à 27 dans un présentoir (38), caractérisé en ce que les dispositifs (1) sont prévus l'un derrière l'autre, dans la zone inférieure du présentoir (38) qui, en vue latérale a à peu près la forme d'un miroir concave connue en soi, comportant chacun un fond (4) oblique, comportant des rainures disposées descendantes vers l'arrière et, dans chaque cas, des fonds commençant à même hauteur, les objets (2) dans la position oblique avant formant avec la verticale un angle plus petit que dans la position oblique arrière, et la différence de hauteur entre l'extrémité arrière du fond (4) d'un dispositif et l'extrémité avant du fond du dispositif suivant étant à peu près égale à la hauteur d'un objet (2) dans la position oblique inclinée vers l'arrière.

29. Dispositif selon la revendication 28, caractérisé en ce qu'l est prévu, au-dessus du dispositif le plus en arrière, deux autres dispositifs (40, 41) dont le dispositif inférieur (40) est également disposé avec un fond descendant vers l'arrière et dont le dispositif supérieur (41) est disposé avec un fond montant vers l'arrière.

30. Procédé de fabrication de dispositifs suivant la revendication 3, caractérisé en ce qu'une feuille (47) de matière synthétique thermoplastique est chauffée et pressée, à l'aide d'une dépression, contre un moule (46) pourvue de conduits d'aspiration (52), sur lequel ont été au préalable appliqués de manière amovible des listels d'appui (54), par exemple en tôle d'acier ou en matière plastique, d'une forme correspondant aux bords de rainures détalonnés, par exemple coudés, la feuille (47) étant formée par aspiration contre le moule (46) autour de ces listels d'appui (54), et en ce qu'ensuite la feuille (47) formée est refroidie et retirée du moule (46) en même temps que les listels d'appui (54).

31. Procédé selon la revendication 30, caractérisé en ce que les listels d'appui (54) sont introduits chacun avec une zone de tige (55) dans une cavité (56) du moule (46).

32. Procédé selon la revendication 31, caractérisé en ce qu'après avoir retiré du moule la feuille (47) formée sous vide, les zones de tige (55) faisant saillie sont séparées des listels d'appui (54).

33. Procédé selon l'une des revendications 30 à 32, caractérisé en ce qu'un agent adhésif ou un liant, par exemple une colle, est appliqué sur les listels d'appui (54) avant aspiration de la feuille (47), afin de renforcer la liaison entre les listels d'appui et la matière plastique de la feuille aspirée.

34. Procédé selon l'une des revendications 30 à 33, caractérisé en ce que la liaison entre les listels d'appui (54) réalisés en matière plastique et la matière plastique de la feuille (47) formée sous vide est renforcée par soudage.

35. Procédé selon la revendication 34, caractérisé en ce que la liaison est renforcée par soudage par ultrasons.

36. Procédé selon la revendication 31, caractérisé en ce qu'au moins certains des conduits d'aspiration (52), voisins des cavités (56) destinées aux zones de tige (55) des listels d'appui (54), débouchent à la surface (50) du moule (46).
